# EUROPEAN PATENT APPLICATION

(11) **EP 4 685 539 A1**
(43) Date of publication of application: **28.01.2026**
(21) Application number: 24800282.6
(22) Date of filing: 16.02.2024
(51) Int. Cl.: G02B 7/02, G02B 7/10, G02B 27/01, G03B 17/12, G03B 3/10

(54) **BARREL ASSEMBLY AND ELECTRONIC DEVICE COMPRISING SAME**

(30) Priority: 04.05.2023 KR 20230058764; 13.06.2023 KR 20230075649
(71) Applicant: Samsung Electronics Co., Ltd., Suwon-si, Gyeonggi-do 16677 (KR)
(72) Inventor: KIM, Taejeong, Suwon-si Gyeonggi-do 16677 (KR); KIM, Moonsoo, Suwon-si Gyeonggi-do 16677 (KR); MOON, Youngmin, Suwon-si Gyeonggi-do 16677 (KR); PARK, Byounggyu, Suwon-si Gyeonggi-do 16677 (KR); BAE, Jaehyun, Suwon-si Gyeonggi-do 16677 (KR); SONG, Kyunghwan, Suwon-si Gyeonggi-do 16677 (KR); YOO, Areum, Suwon-si Gyeonggi-do 16677 (KR); SEO, Sungchoul, Suwon-si Gyeonggi-do 16677 (KR); CHOI, Hyunsuk, Suwon-si Gyeonggi-do 16677 (KR)
(74) Representative: Gulde & Partner
(86) International application number: PCT/KR2024/095261
(87) International publication number: WO 2024/228602

(57) **Abstract**

An embodiment of the present disclosure relates to an electronic device and a method for preventing damage to a display caused by an external light source. The electronic device may comprise a barrel assembly for accommodating a lens group member configured to move a plurality of barrels in the optical axis direction by means of rotational motion. The barrel assembly may include a barrel positioned on the outer side when the plurality of barrels are inserted and coupled. A plurality of parting lines extending from a first open surface to a second open surface, provided on the respective sides of each barrel, may be included on the inner peripheral surface of each barrel. Various other embodiments are possible.

## Description

### [Technical Field]

The disclosure relates to a barrel assembly with enhanced support force between barrels and an electronic device including the same.

### [Background Art]

Services or functions provided by electronic devices are being diversely extended. Further, applications executable on electronic devices are being diversely developed.

To take photos, an electronic device may include a camera module. The camera module may include a plurality of barrels to adjust focal length for magnifying a target object. The plurality of barrels move back and forth to adjust the focal length. A wearable device may be an example of an electronic device equipped with such a camera module.

The wearable device has been developed to increase the utility value of electronic devices and meet various needs of users. The wearable device may be an electronic device that may be attached to or detached from a user's body or clothing. As an example of the wearable device, a head-mounted device (HMD) may be included. The HMD may provide virtual reality (VR), augmented reality (AR), or mixed reality (MR) to a user. The HMD may, e.g., provide an actual screen shown through glasses that act as a display to the user, or provide, through a display, a virtually created screen or a screen captured through a camera.

The HMD may provide a lens assembly between the display and the eyes to provide a larger and clearer screen to the user. The lens assembly may include a lens and at least two or more barrels where the lens is fixed. The combined barrels move in forward and backward directions to adjust the focal length between lenses fixed to the barrels. For this purpose, any one of the at least two or more barrels may be provided with a projection-type moving pin, and another barrel may have an engraved, recessed path where the pin may contact and move in correspondence with the moving pin, which may be referred to as a cam path. The cam path may widen outward while maintaining a predetermined angle.

When the HMD falls to the ground or external impact is applied, the combined barrels may be separated. In other words, the moving pin coupled to the cam path may be separated from the cam path. Therefore, as the angle where the cam path extends becomes narrower, the coupling force between barrels may be increased.

### [Disclosure of Invention]

### [Technical problem]

An embodiment of the disclosure may provide a barrel assembly for enhancing coupling force and an electronic device including the same.

### [Solution to Problems]

A barrel assembly according to an embodiment of the disclosure may comprise a first barrel having at least one projection provided on an outer circumferential surface thereof. The barrel assembly may comprise a second barrel having guide grooves provided in an inner circumferential surface thereof, the guide grooves corresponding to a path along which the at least one projection moves considering that the first barrel is inserted and coupled, and having an inner angle of 20° to 30°. Eighteen parting lines extending from a first opening surface to a second opening surface provided on two opposite sides of the second barrel may be included in the inner circumferential surface of the second barrel. Lengths of two adjacent first arcs among a plurality of first arcs obtained by dividing a first circumference at the first opening surface by the plurality of parting lines may be different from each other. Lengths of two adjacent second arcs among a plurality of second arcs obtained by dividing a second circumference at the second opening surface by the plurality of parting lines may be different from each other. A length of a first target arc obtained by dividing the first circumference by two adjacent parting lines among the plurality of parting lines may be different from a length of a second target arc obtained by dividing the second circumference by the two adjacent parting lines.

An electronic device according to an embodiment of the disclosure may include a barrel assembly for accommodating a lens group member that is configured to move in an optical axis direction by a rotational operation of a plurality of barrels. The barrel assembly may comprise an outer barrel positioned on an outside when the plurality of barrels are inserted and coupled. Guide grooves having an inner angle of 20° to 30° may be provided on an inner circumferential surface of the barrel. Eighteen parting lines extending from a first opening surface to a second opening surface provided on two opposite sides of the barrel may be included in the inner circumferential surface of the barrel. Lengths of two adjacent first arcs among a plurality of first arcs obtained by dividing a first circumference at the first opening surface by the plurality of parting lines may be different from each other. Lengths of two adjacent second arcs among a plurality of second arcs obtained by dividing a second circumference at the second opening surface by the plurality of parting lines may be different from each other. A length of a first target arc obtained by dividing the first circumference by two adjacent parting lines among the plurality of parting lines may be different from a length of a second target arc obtained by dividing the second circumference by the two adjacent parting lines.

### [Advantageous Effects]

Support force of a barrel assembly according to an embodiment of the disclosure may be enhanced.

The barrel assembly according to an embodiment of the disclosure may prevent separation due to external impact.

The technical objects of the disclosure are not limited to the foregoing, and other technical objects may be derived by one of ordinary skill in the art from example embodiments of the disclosure.

### [Brief Description of Drawings]

FIG. 1 is a block diagram illustrating an electronic device in a network environment according to an embodiment of the disclosure;
FIG. 2 is a perspective view illustrating an electronic device according to an embodiment of the disclosure;
FIG. 3 is a front perspective view illustrating a body portion of an electronic device according to an embodiment of the disclosure;
FIG. 4 is a rear perspective view illustrating a body portion of an electronic device according to an embodiment of the disclosure;
FIGS. 5A and 5B are a perspective view illustrating a barrel assembly and a cutaway perspective view illustrating a portion of the barrel assembly according to an embodiment of the disclosure;
FIGS. 6A and 6B are perspective views illustrating a first barrel according to an embodiment of the disclosure;
FIGS. 7A to 7D are perspective views illustrating a second barrel and cutaway perspective views illustrating a portion of the second barrel according to an embodiment of the disclosure;
FIGS. 8A and 8B are a perspective view and a cross-sectional view illustrating a second barrel according to an embodiment of the disclosure;
FIGS. 9A to 9C are cross-sectional views illustrating a second barrel according to an embodiment of the disclosure;
FIGS. 10A and 10B are cross-sectional views illustrating coupling force between a first barrel and a second barrel according to extension angles of cam profiles according to an embodiment of the disclosure;
FIGS. 11A and 11B are perspective views illustrating cutting lines applied to an inner circumferential surface of a second barrel according to an embodiment of the disclosure;
FIG. 12 is a perspective view illustrating a mold device according to an embodiment of the disclosure;
FIG. 13 is a perspective view illustrating a mold device according to an embodiment of the disclosure;
FIG. 14 is a plan view illustrating a mold device according to an embodiment of the disclosure;
FIG. 15 is a perspective view illustrating a mold device according to an embodiment of the disclosure;
FIG. 16 is a perspective view illustrating a mold device according to an embodiment of the disclosure;
FIG. 17 is a plan view illustrating a mold device according to an embodiment of the disclosure;
FIG. 18 is a perspective view illustrating a center core according to an embodiment of the disclosure;
FIGS. 19A to 19C are views illustrating a cross-section of a center core cut at a predetermined height viewed from above and partial perspective views illustrating a first sliding core and a second sliding core according to an embodiment of the disclosure;
FIG. 20 is a cross-sectional view illustrating a center core according to an embodiment of the disclosure;
FIGS. 21A and 21B illustrate cross-sections of a mold device viewed from the front according to an embodiment of the disclosure; and
FIG. 22 is a front view illustrating some sliding cores included in sliding cores and a center core according to an embodiment of the disclosure.

In connection with the description of the drawings, the same or similar reference numerals may be used to denote the same or similar elements.

### [Mode for the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

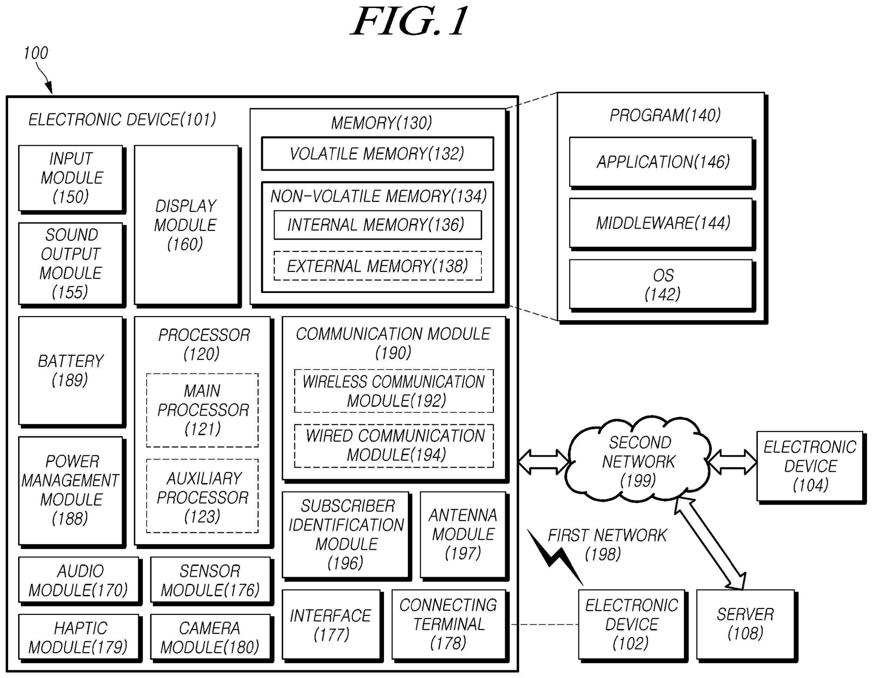

FIG. 1 is a block diagram illustrating an electronic device 101 in a network environment 100 according to an embodiment of the disclosure. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an example, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an example, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an example, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the sub processor 123, the sub processor 123 may be configured to use lower power than the main processor 121 or to be specified for a designated function. The sub processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an example, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an environmental state (e.g., a state of a user) external to the electronic device 101, and then generate an electrical signal or data value corresponding to the detected state. According to an example, the sensor module 176 may include, e.g., a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an example, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an example, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module (not illustrated).

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an example, commands or data may be transmitted or received between the electronic device 101 and the external electronic device 104 via the server 108 coupled with the second network 199. The external electronic devices 102 or 104 each may be a device of the same or a different type from the electronic device 101. According to an example, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an example, the external electronic device 104 or the server 108 may be included in the second network 199. The electronic device 101 may be applied to intelligent services (e.g., smart home, smart city, smart car, or healthcare) based on 5G communication technology or IoT-related technology.

The external electronic devices 102, 104, or 108 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. For example, the external electronic device 102, 104, or 108 may render and transfer, to the electronic device 101, content data executed on an application, and the electronic device 101 receiving the data may output the content data to a display module 160. If the electronic device 101 detects the user's motion through, e.g., an inertial measurement unit (IMU) sensor, the processor 120 of the electronic device 101 may correct the rendering data received from the external electronic device 102, 104, or 108 based on the motion information and output it to the display module 160. Alternatively, the electronic device 101 may transfer the motion information to the external electronic device 102 and request rendering so that screen data is updated accordingly. According to various embodiments, the external electronic device 102, 104, or 108 may be various types of devices, such as a smart phone or a case device capable of storing and charging the electronic device 101.

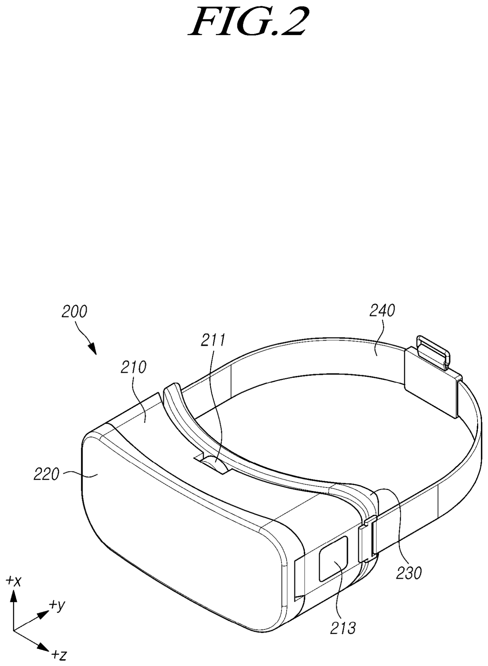

FIG. 2 is a perspective view illustrating an electronic device 200 (e.g., the electronic device 101 of FIG. 1) according to an embodiment of the disclosure.

Referring to FIG. 2, an electronic device 200 may include a body portion 210, a cover portion 220, a facial contact portion 230, or a wearing portion 240. Although not illustrated, the electronic device 200 may include a display (e.g., the display module 160 of FIG. 1) or an input device. The input device may be, e.g., an external electronic device in the form of a joy stick (e.g., the external electronic device 102 of FIG. 1). However, it is not limited thereto and may include various types of input devices. The electronic device 200 may receive information input from the user through the input device.

The body portion 210 may include, e.g., a position adjustment unit 211 or an input unit 213. The position adjustment unit 211 may include, e.g., a button, dial, or wheel form. The position adjustment unit 211 may manually and/or automatically adjust the position of a lens provided in the body portion 210 so that the user's eyes are focused on a screen displayed on the display 160. The position adjustment unit 211 may, e.g., adjust the distance between the display 160 and/or a lens provided in the body portion 210 and the user's eyes. The position adjustment unit 211 may, e.g., widen or narrow the distance between the display 160 and the lens or the distance between the lens and the user's eyes by user manipulation.

As an example, the position adjustment unit 211 may include a driving circuit capable of moving the position of the lens in response to control by a controller (e.g., the processor 120 of FIG. 1) included in the body portion 210. The driving circuit may include, e.g., a motor driven by control of the controller 120. The driving circuit may move the lens forward (e.g., the direction the electronic device 200 faces, -y direction) or backward (e.g., the direction opposite to the direction the electronic device 200 faces, +y direction) using the rotation direction and/or rotational force (or rotation speed) of a motor operated by control of the controller 120. The rotation direction of the motor may be used, e.g., to determine the direction to move the lens (e.g., -y direction or +y direction). The rotational force of the motor may be used, e.g., as energy to rotate a wheel included in the position adjustment unit 211. The lens whose position is adjusted by the position adjustment unit 211 may be at least one lens included in a lens group in which multiple lenses are disposed in a predetermined arrangement. The lens whose position is adjusted may be, e.g., a lens disposed closest to the display 160 in the lens group. The lens whose position is adjusted may be, e.g., a lens disposed farthest from the display 160 in the lens group. The lens whose position is adjusted may be, e.g., a lens disposed in the middle of the lens group. The lens whose position is adjusted may be, e.g., a combination of a lens disposed closest to the display 160 and a lens disposed farthest from the display 160 in the lens group. The lens whose position is adjusted may be, e.g., a combination of a lens disposed closest to the display 160 and a lens disposed in the middle of the lens group. The lens whose position is adjusted may be, e.g., a combination of a lens disposed in the middle and a lens disposed farthest from the display 160 in the lens group.

The input unit 213 may be of various types including, e.g., a touch pad or button form. For example, the user may manipulate the input unit 213 to move a UI displayed on the display 160. The user may manipulate the input unit 213 to operate a camera module (e.g., the camera module 180 of FIG. 1) of the electronic device 200. The user may operate the camera module 180 to take photos or videos. The user may manipulate the input unit 213 to switch between a see-closed mode providing virtual reality (VR) and/or a see-through mode providing augmented reality (AR). Further, the user may manipulate the input unit 213 to control various functions provided by the electronic device 200 (e.g., volume control, control of running video, etc.). Although not illustrated, the body portion 210 may include components such as a sound output module (e.g., the sound output module 155 of FIG. 1), an audio module (e.g., the audio module 170 of FIG. 1), a battery (e.g., the battery 189 of FIG. 1), a sensor module (e.g., the sensor module 176 of FIG. 1), a connecting terminal (e.g., the connecting terminal of FIG. 1), a haptic module (e.g., the haptic module 179 of FIG. 1), etc.

The input unit 213 may include, e.g., a button operable by the user to indicate that the electronic device 200 is being worn. The button may be, e.g., a physical button. The physical button may be provided at a position where manipulation is easy when the user U is wearing the electronic device 200.

The cover portion 220 may include, e.g., a cover or window. The cover portion 220 may firmly support the body portion 210 in which the display 160 is built. In the case of a mounted HMD, the cover portion 220 may firmly support the body portion 210 or an electronic device mounted on the body portion 210 (e.g., the external electronic device 102 of FIG. 1). The cover portion 220 may enhance aesthetic appeal through various types of materials and colors.

The facial contact portion 230 may tightly contact the area around the user's eyes. The facial contact portion 230 may include soft materials (e.g., sponge, rubber, etc.) to protect against excessive contact with the area around the user's eyes.

The wearing portion 240 may fix the user's head and the electronic device 200. The wearing portion 240 may include an elastic material (e.g., polyurethane). The wearing portion 240 may include a buckle or strap.

In addition to the configuration illustrated in FIG. 2, the electronic device 200 may include additional components as needed.

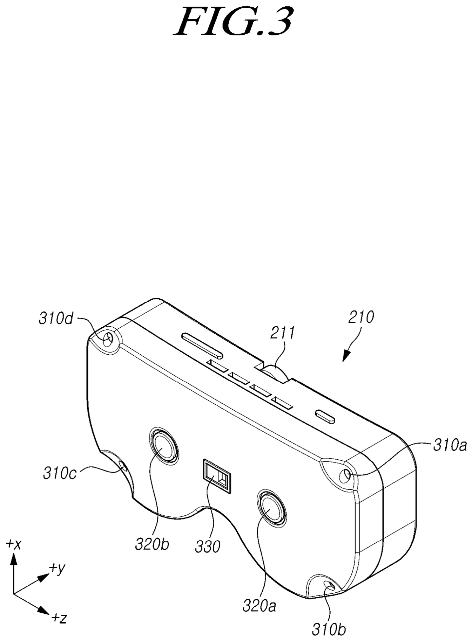

FIGS. 3 to 4 are perspective views illustrating the body portion 210 of the electronic device 200 according to an embodiment of the disclosure.

In FIGS. 3 to 4, the upper end of the electronic device 200 may be defined as the +x direction, and the lower end of the electronic device 200 may be defined as the -x direction. The direction the electronic device 200 faces or the direction of the user's gaze when wearing the electronic device 200 may be defined as the -y direction, and the opposite direction may be referred to as the +y direction. When the user wears the electronic device 200, with respect to the center of the electronic device 200, the user's left direction may be defined as the +z direction, and the user's right direction may be defined as the -z direction.

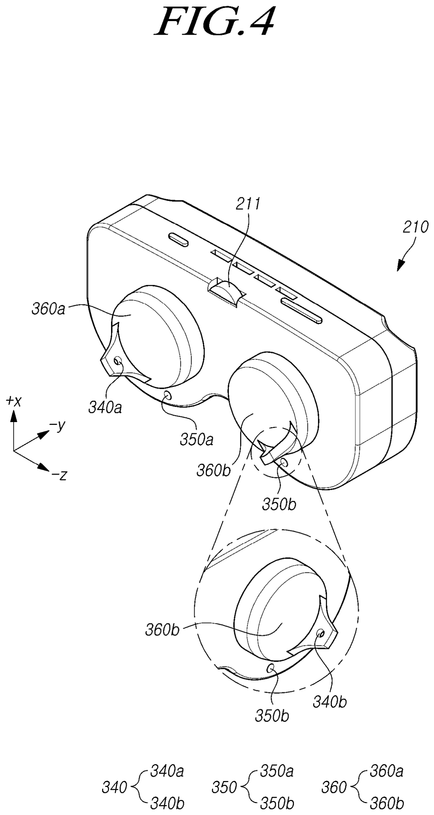

FIG. 3 is a front perspective view illustrating the electronic device 200 of FIG. 2, and FIG. 4 is a rear perspective view illustrating the electronic device 200 of FIG. 2.

Referring to FIG. 3, a camera module (e.g., the camera module 180 of FIG. 1) or a depth sensor 330 may be disposed inside the electronic device 200. The camera module 180 may include a plurality of camera modules. The camera module 180 may include a first camera module 310 or a second camera module 320.

The first camera module 310 may include, e.g., a first recognition camera 310a, a second recognition camera 310b, a third recognition camera 310c, or a fourth recognition camera 310d.

The first camera module 310 may capture user motions. For example, the first camera module 310 may capture user gestures (e.g., hand movements). The first camera module 310 may be disposed at each of four corners of the body portion 210. The first camera module 310 may be a global shutter (GS) type camera. For example, the first camera module 310 may be a camera supporting 3DoF (degrees of freedom) or 6DoF, which may provide position recognition and/or motion recognition in a 360-degree space (e.g., omni-directionally). The first camera module 310 may perform simultaneous localization and mapping (SLAM) functions and user movement recognition functions using a plurality of global shutter cameras of the same specification and performance as stereo cameras.

The second camera module 320 may include, e.g., a first capture camera 320a or a second capture camera 320b. The second camera module 320 may capture external images. According to an embodiment, the second camera module 320 may be a global shutter-type or rolling shutter (RS)-type camera. For example, the second camera module 320 may include a high-resolution color camera and may be a high resolution (HR) or photo video (PV) camera. Further, the second camera module 320 may provide an auto-focus (AF) function and an optical image stabilizer (OIS) function.

A depth sensor 330 may be disposed at a position adjacent to the second camera module 320 in the electronic device 200. The depth sensor 330 may include a light-emitting unit or a light receiving unit. For example, the light-emitting unit may provide light to increase brightness (e.g., illuminance) around the electronic device 200 when the second camera module 320 obtains external images, and may reduce difficulties in image acquisition due to dark environments, mixing of various light sources, and/or light reflection. The depth sensor 330 may include, e.g., an infrared (IR) camera (e.g., time of flight (TOF) camera or structured light camera). For example, the IR camera may be operated as at least a portion of a sensor module (e.g., the sensor module 176 of FIG. 1) for detecting a distance from the subject.

Referring to FIG. 4, a third camera module 340, a fourth camera module 350, or an optical module 360 may be disposed inside the electronic device 200.

The third camera module 340 may include a first eye tracking (ET) camera 340a or a second ET camera 340b. According to an embodiment, the third camera module 340 may capture the trajectory of the user's eye (e.g., a pupil) or gaze. For example, the third camera module 340 may capture reflection patterns of light emitted by a light-emitting unit toward the user's eyes.

For example, the light-emitting unit may emit infrared light for tracking gaze trajectory using the third camera module 340. For example, the light-emitting unit may include an IR LED. According to an embodiment, a processor (e.g., the processor 120 of FIG. 1) may adjust the position of a virtual image so that the virtual image projected on the display 160 corresponds to the direction the user's pupils are gazing. According to an embodiment, the third camera module 340 may include a global shutter (GS)-type camera and may track the trajectory of the user's eye or gaze using a plurality of third camera modules 340 having the same specifications and performance.

The fourth camera module 350 may include a first facial recognition camera 350a or a second facial recognition camera 350b. The fourth camera module 350 may detect and track user facial expressions.

The electronic device 200 may include at least one optical module 360. The optical module 360 may include, e.g., a lens group constituted of one or more lenses, one or more lens housings, or a display (e.g., the display module 160 of FIG. 1). The one or more lenses may be fixed to the lens housing.

The lens group, display 160, or second camera module (e.g., the second camera module of FIG. 4) included in the optical module 360 may be sequentially disposed in the -y direction with respect to the user (e.g., the user's eyes).

The optical module 360 may include a first optical module (e.g., left optical module) 360a or a second optical module (e.g., right optical module) 360b. A display (e.g., the display module 160 of FIG. 1) or transparent/translucent lens may be integrally fixed or detachably fixed to the optical module 360.

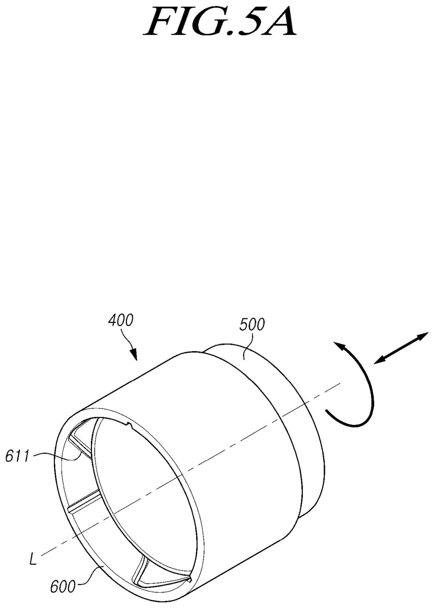

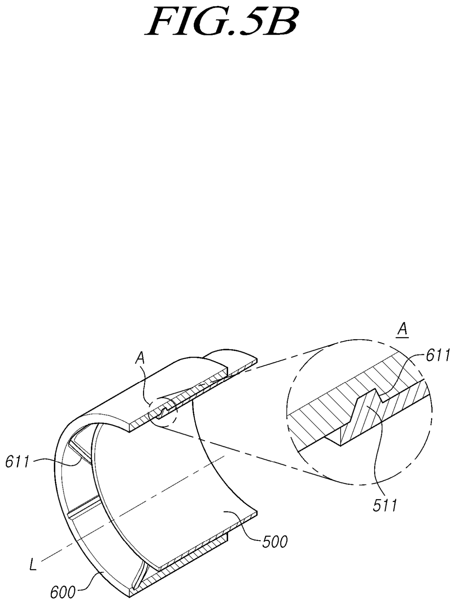

According to an example, the optical module 360 may include a barrel assembly (e.g., the barrel assembly 400 of FIG. 5). The barrel assembly 400 may include at least one barrel (e.g., the first barrel 500 or second barrel 600 of FIG. 5).

According to an example, a display 160 or transparent/translucent lens may be integrally fixed or detachably fixed to the barrel assembly 400. Other components may also be mounted to the at least one barrel 500, 600. As an example, an optical image stabilizer (OIS) module may be mounted to the at least one barrel 500, 600. An acme thread for transmitting power to the at least one barrel 500, 600 may be mounted as needed. A gear groove may be provided to the at least one barrel 500, 600 as needed. In other words, the acme thread or gear groove may be included in or omitted from the at least one barrel 500, 600.

According to an example, the at least one barrel 400, 500 may be manufactured by injection molding or die casting molds. During the manufacturing process of the at least one barrel 400, 500, multiple dividing lines may be formed on the inner circumferential surface of the at least one barrel 400, 500, and the dividing lines may be referred to as parting lines.

According to an example, the barrels 500, 600 included in the barrel assembly 400 may rotate or move in linear motion. An inner barrel (e.g., the first barrel 500 of FIG. 5) may be fitted into the inside of an outer barrel (e.g., the second barrel 600 of FIG. 5). The inner barrel 500 may be provided with a moving pin (e.g., the moving pin 511 of FIG. 5) on the outside of the inner barrel 500 to move while the outer barrel 600 is fixed. The outer barrel 500 may be provided with a cam profile (e.g., 611 of FIG. 5) formed to be engraved and recessed in the inside of the outer barrel 500 to guide the moving pin 511 to move on a designated path. The inner barrel 500 may rotate or move linearly as the moving pin 511 moves on the cam profile 611. Here, the moving pin 511 may be understood as a projection. The cam profile 611 may be understood as a guide groove. This is described in detail in FIG. 5.

A lens mounted to the optical module 360 may be moved by a controller (e.g., the processor 120 of FIG. 1) included in the body portion 210 (e.g., the body portion 210 of FIG. 3). A driving circuit may move the position of a lens included in the optical module 360 in response to control by the controller 120. The driving circuit may include, e.g., a motor driven by control of the controller 120. The driving circuit may move the lens forward (e.g., the direction toward the display 160, -y direction) or backward (e.g., the direction opposite to the display 160, +y direction) using the rotation direction and/or rotational force (or rotation speed) of a motor operated by control of the controller 120. The rotation direction of the motor may be used, e.g., to determine the direction to move the lens (e.g., -y direction or +y direction). The rotational force of the motor may be used, e.g., as energy to rotate a wheel included in the position adjustment unit 211. The lens whose position is adjusted by the position adjustment unit 211 may be at least one lens included in a lens group in which multiple lenses are disposed in a predetermined arrangement. The lens whose position is adjusted may be, e.g., a lens disposed closest to the display 160 in the lens group. The lens whose position is adjusted may be, e.g., a lens disposed farthest from the display 160 in the lens group. The lens whose position is adjusted may be, e.g., a lens disposed in the middle of the lens group. The lens whose position is adjusted may be, e.g., a combination of a lens disposed closest to the display 160 and a lens disposed farthest from the display 160 in the lens group. The lens whose position is adjusted may be, e.g., a combination of a lens disposed closest to the display 160 and a lens disposed in the middle of the lens group. The lens whose position is adjusted may be, e.g., a combination of a lens disposed in the middle and a lens disposed farthest from the display 160 in the lens group.

In addition to what is illustrated in FIGS. 3 or 4, the electronic device 200 may include various components. For example, the electronic device 200 may include a printed circuit board (PCB), microphone, speaker, battery, antenna, and at least one sensor (e.g., acceleration sensor, gyro sensor, touch sensor, etc.).

The electronic devices 101, 200 described above are merely examples of electronic devices 101, 200 to which the barrel assembly 400 to be described below may be applied, and the electronic devices 101, 200 may include various electronic devices (e.g., smart phones, tablet PCs, cameras, wearable devices) to which a camera module (e.g., the camera module 180 of FIG. 1) including the barrel assembly 400 may be applied, in addition to head-mounted devices (HMD).

FIGS. 5A and 5B are a perspective view illustrating a barrel assembly 400 and a cutaway perspective view illustrating a portion of the barrel assembly 400 according to an embodiment of the disclosure.

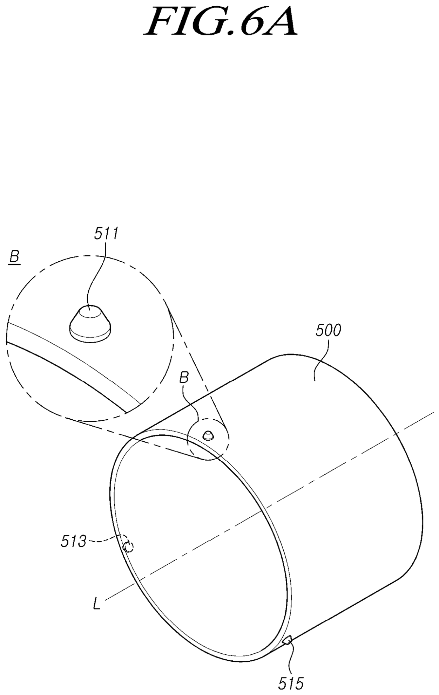

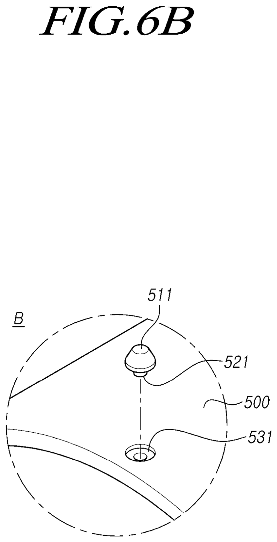

FIGS. 6A and 6B are perspective views illustrating a first barrel 500 according to an embodiment of the disclosure.

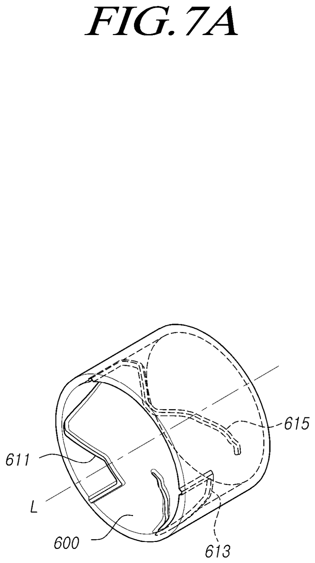

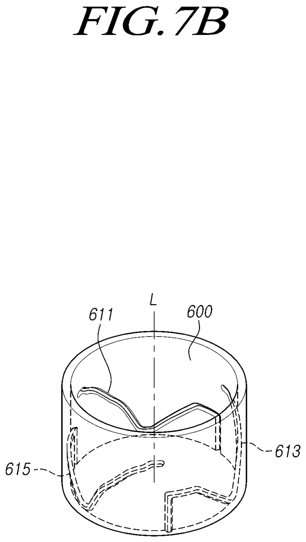

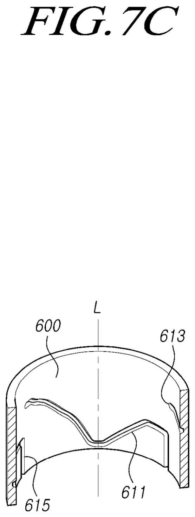

FIGS. 7A to 7D are perspective views illustrating a second barrel 600 and cutaway perspective views illustrating a portion of the second barrel 600 according to an embodiment of the disclosure.

The barrel assembly 400 to be described below may be applied to various types of electronic devices (e.g., the electronic device 101 of FIG. 1). The barrel assembly 400 may be applied to an electronic device 101 including a camera module (e.g., the camera module 180 of FIG. 1) to which barrels may be applied. For example, the electronic device 101 may include smart phones, tablet PCs, cameras, wearable devices, and is not limited thereto, and may include electronic devices including a camera module 180 to which barrels may be applied. The head mounted electronic device 101 illustrated in FIGS. 2 to 4 may be understood as being illustrated as an example of the electronic device 101.

Referring to FIGS. 5A and 5B, (a) illustrates a perspective view illustrating the barrel assembly 400, and (b) illustrates a perspective view with a portion cut away to describe the coupling relationship between the first barrel 500 and second barrel 600 included in the barrel assembly 400.

Referring to FIGS. 6A and 6B, (a) illustrates a perspective view illustrating the first barrel 500, and (b) illustrates the first moving pin 511 separated from the first barrel 500 when the first moving pin 511 of the first barrel 500 is provided as a separate component.

Referring to FIGS. 7A to 7D, (a) and (b) illustrate perspective views illustrating the second barrel 600, and (c) illustrates a perspective view with a portion of the second barrel 600 cut away. (d) is a perspective view illustrating an application example of the second barrel 600 according to an embodiment.

According to an example, the barrel assembly 400 may include a first barrel 500 and a second barrel 600. A display (e.g., the display module 160 of FIG. 1) or transparent/translucent lens may be integrally fixed or detachably fixed to the barrel assembly 400. The barrel assembly 400 may further include barrels as needed. As an example, a third barrel (not illustrated) may be provided inside the second barrel 600. Hereinafter, for convenience of description, it is assumed that the barrel assembly 400 is constituted of the first barrel 500 and second barrel 600, and the description will focus on the first barrel 500 and second barrel 600.

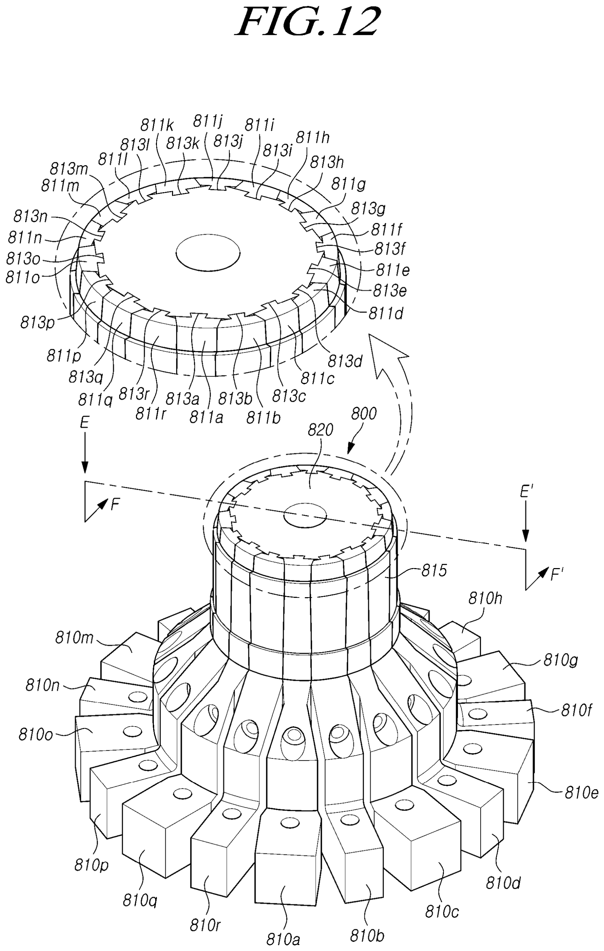

According to an example, the first barrel 500 and second barrel 600 may be injection molded by a mold device. The first barrel 500 and second barrel 600 may be manufactured from at least one or a combination of two or more of plastic, ceramic, or metal. The mold device (e.g., the mold device 800 of FIG. 12 and subsequent figures) for manufacturing the second barrel 600 is described in detail in FIG. 12 and subsequent figures.

According to an example, the first barrel 500 may rotate or move linearly in the optical axis L direction inside the second barrel 600. Here, the optical axis L direction may be defined as a virtual axis passing through the center of a lens provided in the barrel assembly 400. The optical axis L direction may partially or entirely correspond to the direction (y direction) that an electronic device (e.g., the electronic device 200 of FIG. 2) faces.

According to an example, the first barrel 500 may be disposed inside the second barrel 600. At least a portion of the outer surface of the first barrel 500 may correspond to at least a portion of the inner surface of the second barrel 600.

According to an example, for the first barrel 500 to move inside the second barrel 600, the first barrel 500 may include at least one moving pin 511, 513, 515. The at least one moving pin 511, 513, 515 may be understood as conical or truncated cone-shaped projections protruding outward from predetermined positions of the first barrel 500. The at least one moving pin 511, 513, 515 may include a first moving pin 511, a second moving pin 513, and a third moving pin 515. The first to third moving pins 511, 513, 515 may be provided at predetermined positions on the outer surface of the first barrel 500. The first to third moving pins 511, 513, 515 may be disposed at predetermined intervals on a cross-section cut perpendicular to the optical axis L in the first barrel 500. The predetermined interval may be, e.g., 120°.

According to an example, the second barrel 600 may be provided with at least one cam profile 611, 613, 615 that is a path for the moving pins 511, 513, 515 provided on the first barrel 500 to move. The at least one cam profile 611, 613, 615 may be formed to be engraved in the inside of the second barrel 600. The at least one cam profile 611, 613, 615 may be formed by depressing a portion of the second barrel 600.

According to an example, the at least one cam profile 611, 613, 615 may include a first cam profile 611, a second cam profile 613, and a third cam profile 615. The first to third cam profiles 611, 613, 615 may be disposed at predetermined intervals. The predetermined interval may be, e.g., 120°.

According to an example, the first to third cam profiles 611, 613, 615 may be provided in the same shape. The shape of the first to third cam profiles 611, 613, 615 may be composed of a combination of straight lines and curves. The shape of the cam profile is not limited to what is illustrated and may be variously provided in correspondence to the movement path of the barrel assembly 400.

In the partial enlarged view A of FIG. 5, the first to third moving pins 511, 513, 515 and the first to third cam profiles 611, 613, 615 may correspond to each other. As an example, the first moving pin 511 and first cam profile 611 may correspond to each other. The second moving pin 513 and second cam profile 613 may correspond to each other. The third moving pin 515 and third cam profile 615 may correspond to each other.

According to an example, as the first barrel 500 moves inside the second barrel 600, the first moving pin 511 may move along a path formed in the first cam profile 611. As the first barrel 500 moves inside the second barrel 600, the second moving pin 513 may move along a path formed in the second cam profile 613. As the first barrel 500 moves inside the second barrel 600, the third moving pin 515 may move along a path formed in the third cam profile 615.

According to an example, the first to third moving pins 511, 513, 515 may be formed integrally with the first barrel 500 or implemented as separate components. The first to third moving pins 511, 513, 515 may have a conical or truncated cone shape. However, without limitations thereto, the first to third moving pins 511, 513, 515 may have a truncated polygonal pyramid shape where the cross-sectional area narrows as the height increases.

According to an example, when the first to third moving pins 511, 513, 515 are implemented as separate components from the first barrel 500, the first to third moving pins 511, 513, 515 may be detachable to facilitate separation and/or coupling with the first barrel 500.

In the partial enlarged view B of the first barrel 500 illustrated in FIG. 6(b), a first pin groove 531 may be provided at a predetermined position of the first barrel 500 for coupling the first moving pin 511. A coupling portion 521 of the first moving pin 511 may be seated in the space provided in the first pin groove 531.

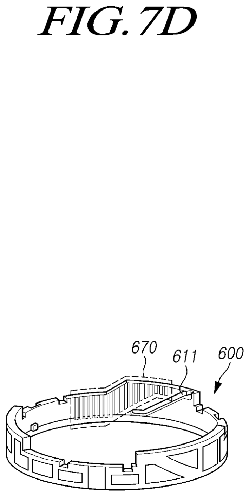

Referring to FIG. 7(d), the second barrel 600 may further include a gear groove 670. The gear groove 670 may be provided inside the second barrel 600. The gear groove 670 may be formed to be engraved and recessed or to be embossed to protrude on the inside of the second barrel 600. The gear groove 670 may be formed by removing a portion of the second barrel 600. The gear groove 670 may be molded by an embossed protruding shape provided on a mold device (e.g., the mold device 800 of FIG. 12) that molds the second barrel 600. A plurality of gear grooves 670 may be provided in a direction parallel to the optical axis L of the second barrel 600. The gear groove 660 may be formed at positions that do not invade or interfere with paths formed by cam profiles (e.g., the cam profiles 611, 613, 615 of FIG. 5) and/or vertical profiles (e.g., the vertical profiles 621, 623, 625 of FIG. 5) provided on the second barrel 600.

According to an example, the gear groove 670 may be provided for gears provided inside the second barrel 600 to mesh and transmit power. The angle where the gear groove 670 extends inward may form a predetermined angle. As the predetermined angle becomes smaller, the support force for the gear corresponding to the gear groove 670 to transmit power may be enhanced.

As an example, the angle where the gear groove 670 extends inward may meet 20° to 30°. However, without limitations thereto, if undercut phenomena do not occur when the mold device 800 molds the second barrel 600, the extending angle may meet less than 20°.

Referring to FIG. 7(d), the second barrel 600 may further include a thread groove (not illustrated). The thread groove may be provided inside the second barrel 600. The thread groove may be formed to be engraved and recessed in the inside of the second barrel 600 or by removing a portion of the second barrel 600. The thread groove may be molded by an embossed protruding shape provided on a mold device (e.g., the mold device 800 of FIG. 12) that molds the second barrel 600. A plurality of thread grooves may be provided in a direction parallel to the optical axis L of the second barrel 600. The thread groove may be formed at positions that do not invade or interfere with paths formed by cam profiles (e.g., the cam profiles 611, 613, 615 of FIG. 5), gear groove 670, and/or vertical profiles (e.g., the vertical profiles 621, 623, 625 of FIG. 5) provided on the second barrel 600.

According to an example, the thread groove may be provided for an acme thread provided inside the second barrel 600 to mesh and transmit power. Since the thread angle of the trapezoidal acme thread approximately meets 29°, the angle where the thread groove extends inward may form a predetermined angle. As the predetermined angle corresponds more to the thread angle of the acme thread, the support force for the gear corresponding to the thread groove to transmit power may be enhanced. As an example, the angle where the thread groove extends inward may meet 20° to 30°.

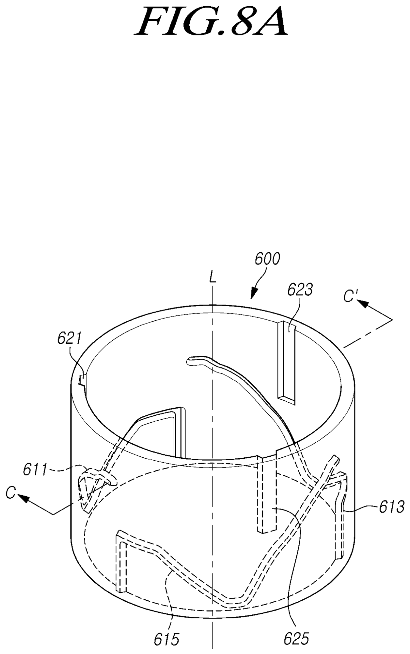

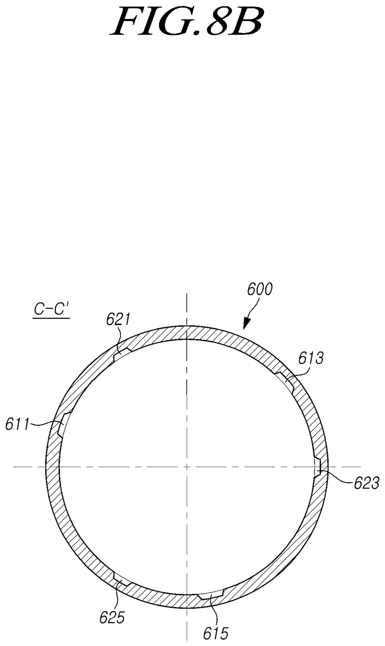

FIGS. 8A and 8B are a perspective view and cross-sectional view illustrating a second barrel 600 (e.g., the second barrel 600 of FIG. 5) according to an embodiment of the disclosure.

FIG. 8A illustrates a perspective view illustrating the second barrel 600, and FIG. 8B illustrates a cross-section cut by the C-C' plane of (a).

According to an example, the second barrel 600 may further include cam profiles 621, 623, 625 in addition to the first to third cam profiles 611, 613, 615. The cam profiles 621, 623, 625 may form engraved paths of a predetermined length in a direction parallel to the optical axis L. Hereinafter, the cam profiles 621, 623, 625 are referred to as vertical profiles.

According to an example, the vertical profiles 621, 623, 625 may be provided to receive a separate barrel inside the second barrel 600. As an example, when projections corresponding to the vertical profiles 621, 623, 625 are provided on the outside of the separate barrel, the separate barrel may perform linear motion in the optical-axis direction inside the second barrel 600.

According to an example, the vertical profiles 621, 623, 625 may be provided to receive a separate functional module (e.g., optical image stabilization (OIS) module) inside the second barrel 600. As an example, the separate functional module may be fixed inside the second barrel 600 or perform linear motion inside the second barrel 600.

According to an example, the vertical profiles 621, 623, 625 may include a first vertical profile 621, a second vertical profile 623, and a third vertical profile 625. The first to third vertical profiles 621, 623, 625 may be disposed at predetermined intervals. The predetermined interval may be, e.g., 120°.

According to an example, the first to third cam profiles 611, 613, 615 may form independent paths from the first to third vertical profiles 621, 623, 625. In other words, the first to third cam profiles 611, 613, 615 may form unique paths without interfering with or invading paths formed by the first to third vertical profiles 621, 623, 625.

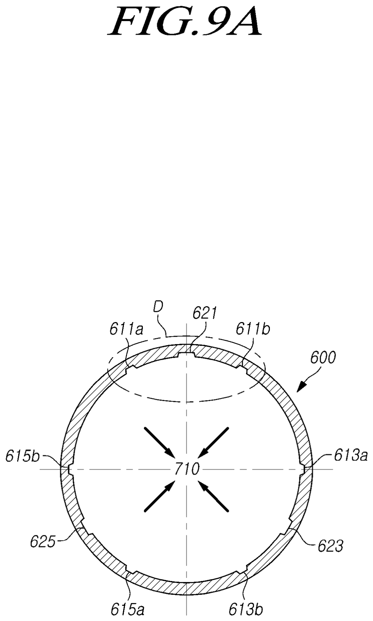

FIGS. 9A to 9C are cross-sectional views illustrating a second barrel 600 (e.g., the second barrel 600 of FIG. 5) according to an embodiment of the disclosure.

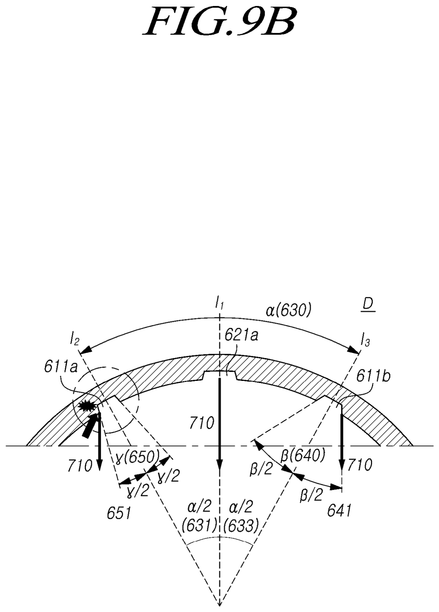

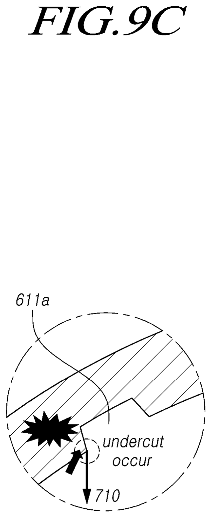

Referring to FIGS. 9A to 9C, FIG. 9A illustrates a cross-section cut by a plane perpendicular to the optical axis (e.g., the optical axis L of FIG. 5) in the second barrel 600, and FIG. 9B illustrates an enlarged view illustrating a portion (D) of FIG. 9A. FIG. 9C illustrates an enlarged view illustrating a portion of FIG. 9B to describe a second undercut phenomenon. FIGS. 9A to 9C may be understood as diagrams conceptually illustrated to describe undercut phenomena according to inner extension angles 640, 650 of cam profiles (e.g., the cam profiles 611, 613, 615 of FIG. 5). Here, the undercut phenomenon may be understood as a phenomenon where collision occurs as injection molded portions are separated from a mold device (e.g., the mold device 800 of FIG. 12 and subsequent figures). Therefore, some differences from the cross-sectional view illustrated in FIG. 8 may occur.

According to an example, the first to third cam profiles 611, 613, 615 may be cut by a plane perpendicular to the optical axis L.

According to an example, the first cam profile 611 may be implemented as cam profile 1-1 611a and cam profile 1-2 611b. The second cam profile 613 may be implemented as cam profile 2-1 613a and cam profile 2-2 613b. The third cam profile 615 may be implemented as cam profile 3-1 615a and cam profile 3-2 615b.

According to an example, cam profile 1-1 611a, cam profile 2-1 613a, and cam profile 3-1 615a may be disposed at 120° intervals from each other. The cam profile 1-1 611a, cam profile 2-1 613a, and cam profile 3-1 615a may have the same shape.

According to an example, cam profile 1-2 611b, cam profile 2-2 613b, and cam profile 3-2 615b may be disposed at 120° intervals from each other. The cam profile 1-2 611b, cam profile 2-2 613b, and cam profile 3-2 615b may have the same shape.

According to an example, the mold device 800 may include a plurality of sliding cores (e.g., the first to eighteenth sliding cores 810a to 810r of FIG. 12). A barrel division angle α 630 for dividing the second barrel 600 may be determined corresponding to the number of sliding cores. The barrel division angle α 630 may be defined as α=360/N, where N may be defined as the number of sliding cores forming the mold device 800.

According to an example, the first to third cam profiles 611, 613, 615 may extend inward at predetermined angles. The predetermined angles may be set by patterns formed to be embossed on the mold device 800. The predetermined angles is defined as inner extension angles.

As an example, the inner extension angle γ of cam profile 1-1 611a may be defined as a first extension angle 650, and the inner extension angle β of cam profile 1-2 611b may be defined as a second extension angle 640. Here, it is assumed that α, β, and γ have the relationship α≥β>γ. Hereinafter, for convenience of description, it is assumed that N=6, α=60°, β=60°, and γ=20°.

According to an example, raw material (e.g., molten synthetic resin) for molding the second barrel 600 may be input to the outside of the mold device 800, and the second barrel 600 may be separated as the mold device 800 contracts toward the center. In this case, the center direction in which the mold device 800 contracts to separate the second barrel 600 is defined as a first operating direction 710.

According to an example, undercut phenomena may occur according to the relationship between extension angles 640, 650 formed by cam profiles and the barrel division angle 630. In other words, as the mold device 800 contracts and the second barrel 600 is separated from the mold device 800, collision may occur between the second barrel 600 and the mold device 800.

According to an example, when a virtual line l₃ bisecting the second extension angle 640 and a virtual line l₁ bisecting the barrel division angle 630 are extended, the angle 633 formed by l₃ and l₁ is 30°, which is the same as the angle (β/2) that bisects the second extension angle 640. Therefore, a right extension line 641 forming the second extension angle 640 and the first operating direction 710 are parallel. Since the right extension line 641 and the first operating direction 710 are parallel, undercut phenomena, i.e., collision phenomena between the mold device 800 and second barrel 600, may not occur as the mold device 800 contracts.

According to an example, when a virtual line l₂ bisecting the first extension angle 650 and a virtual line l₁ bisecting the barrel division angle 630 are extended, the angle 631 formed by l₂ and l₁ is 30°, which is greater than the angle (γ/2) that bisects the first extension angle 650. Therefore, a left extension line 651 forming the first extension angle 650 and the first operating direction 710 are not parallel. Since the left extension line 641 and the first operating direction 710 are not parallel, undercut phenomena, i.e., collision phenomena between the mold device 800 and second barrel 600, may occur as the mold device 800 contracts.

According to an example, when cam profiles 611, 613, 615 are formed as paths parallel to the optical axis L, the probability of undercut phenomena occurring may be high. In this case, undercut phenomena may not occur when the barrel division angle 630 is at least smaller than or equal to the extension angles 640, 650 formed by the cam profiles 611, 613, 615.

According to an example, the same may be described for the second cam profile 613 and third cam profile 615.

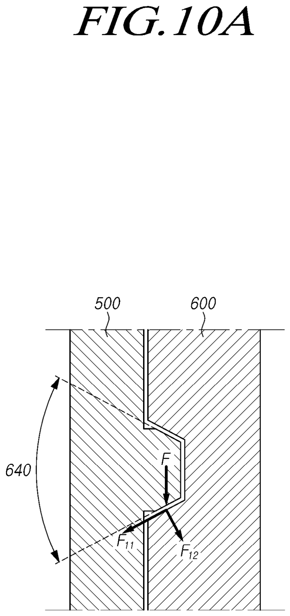

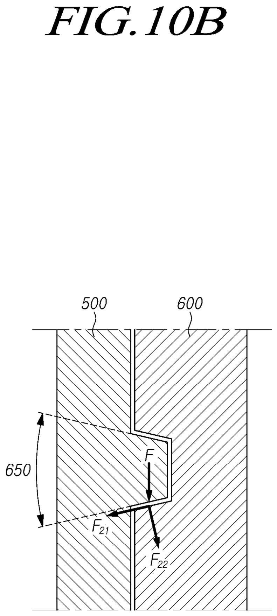

According to an example, as the extension angle of the cam profiles 611, 613, 615 becomes narrower, the coupling force between the second barrel 600 and first barrel (e.g., the first barrel 500 of FIG. 5) may be enhanced. Therefore, it is advantageous to keep the barrel division angle 630 narrow to maintain a narrow extension angle of the cam profiles 611, 613, 615 while preventing undercut phenomena. Therefore, the number of sliding cores constituting the mold device 800 may be increased to narrow the barrel division angle 630. The extension angles of the cam profiles 611, 613, 615 and the coupling force between the first barrel 500 and second barrel 600 are described in detail in FIG. 10.

FIGS. 10A and 10B are cross-sectional views illustrating coupling force between a first barrel 500 (e.g., the first barrel 500 of FIG. 5) and a second barrel 600 (e.g., the second barrel 600 of FIG. 5) according to extension angles of cam profiles (e.g., the first to third cam profiles 611, 613, 615 of FIG. 5) according to an embodiment of the disclosure. For convenience of description, an enlarged cross-sectional view illustrating the vicinity of the first cam profile 611 and first moving pin 511 is illustrated.

Referring to FIG. 10, FIG. 10A is a cross-sectional view illustrating coupling force between the first barrel 500 and second barrel 600 when the first cam profile 611 has a second extension angle 640 (e.g., the second extension angle 640 of FIG. 9), and FIG. 10B is a cross-sectional view illustrating coupling force between the first barrel 500 and second barrel 600 when the first cam profile 611 has a first extension angle 650 (e.g., the first extension angle 650 of FIG. 9).

According to an example, when an external force F acts on a barrel assembly (e.g., the barrel assembly 400 of FIG. 5), the external force F may be resolved into two forces. As an example, the external force F may be resolved into separation force components F₁₁, F₂₁ where the first moving pin 511 tries to separate outside the first cam profile 611 and support force components F₁₂, F₂₂ where the first moving pin 511 tries to support inside the first cam profile 611.

According to an example, force components (e.g., separation forces F₁₁, F₂₁ and support forces F₁₂, F₂₂) resolved from the external force F may vary according to the size of extension angles 640, 650 of the first cam profile 611. As an example, the first separation force F₁₁ component resolved from the external force F in (a) may be smaller than the second separation force F₂₁ component resolved from the external force F in (b). As an example, the first support force F₁₂ component resolved from the external force F in (a) may be greater than the second support force F₂₂ component resolved from the external force F in (b). Therefore, in case (b) where the extension angle 640, 650 of the first cam profile 611 is smaller, the barrel assembly 400 may be more robust against external impacts (e.g., external force F).

According to an example, by reducing the angle of the cam profiles 611, 613, 615 according to the disclosure to 20°, a barrel assembly 400 with enhanced rigidity between the first barrel 500 and second barrel 600 is to be provided.

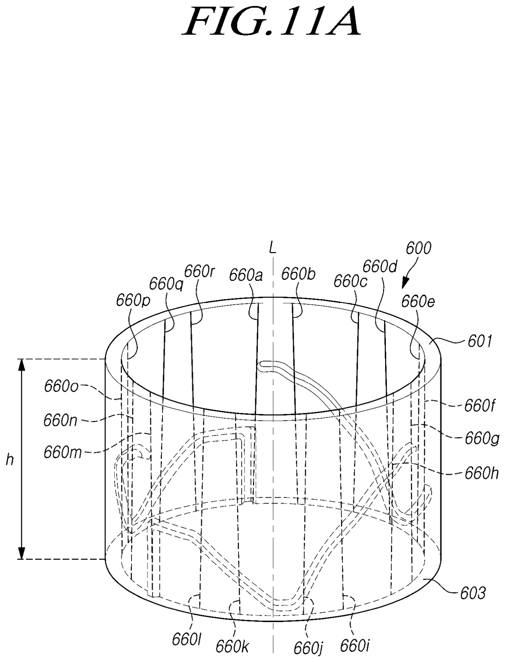

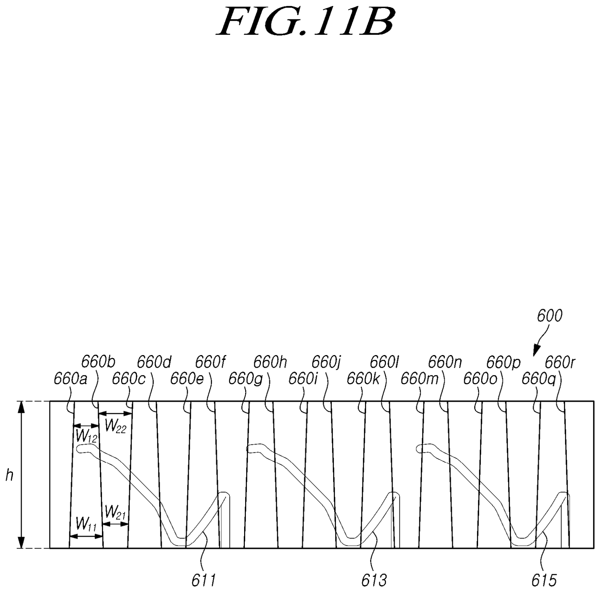

FIGS. 11A and 11B are perspective views illustrating cutting lines 660 applied to the inner circumferential surface of a second barrel 600 (e.g., the second barrel 600 of FIG. 5) according to an embodiment of the disclosure.

Referring to FIG. 11, FIG. 11A is a perspective view illustrating cutting lines 660 applied to the second barrel 600, and FIG. 11B is a front view illustrating the second barrel 600 illustrated in FIG. 11A developed from the inner circumferential surface.

According to an example, as the second barrel 600 is manufactured from a mold device (e.g., the mold device 800 of FIG. 12), a plurality of cutting lines 660 may be provided inside the second barrel 600. The cutting lines 660 may be referred to as parting lines. The parting lines 660 may occur due to gaps or steps present between sliding cores (e.g., the first to eighteenth sliding cores 810a to 810r of FIG. 12) constituting the mold device 800. A plurality of parting lines 660 may be provided. For example, the parting lines 660 may be constituted of 18 parting lines 660a to 660r, and are not limited thereto, and the parting lines 660 may be constituted of 18 or more.

According to an example, the parting lines may be implemented as diagonal lines. In other words, the parting lines may not be parallel to the optical axis L direction. The parting lines may form predetermined angles with the optical axis L. The predetermined angles may be, e.g., greater than 0° and less than 45°.

According to an example, the parting lines may be implemented vertically. The parting lines may be implemented vertically corresponding to the divided shape structure of the mold device 800. When the parting lines are implemented vertically, the parting lines may be parallel to the optical axis L direction. For the parting lines to be implemented vertically, angles formed between side surfaces of adjacent sliding cores included in sliding cores (e.g., the first to eighteenth sliding cores 810a to 810r of FIG. 12) may substantially meet 0°.

According to an example, the parting lines may be implemented as bent lines. The parting lines may be implemented as lines bent at least multiple times corresponding to the divided shape structure of the mold device 800.

According to an example, the parting lines may be implemented as curves. The parting lines may be implemented as curves corresponding to the divided shape structure of the mold device 800.

According to an example, the parting lines 660 may extend to the inner circumferential surface of the second barrel 600. The parting lines 660 may extend from a first opening surface 601 to a second opening surface 603 provided on two opposite sides. The inner circumference of the first opening surface 601 may be defined as a first circumference. The inner circumference of the second opening surface 603 may be defined as a second circumference. The length of the first circumference and the length of the second circumference may be the same or different.

According to an example, the first circumference may be divided into a plurality of circumferences by the parting lines 660. An arc into which the first circumference is divided by the parting lines 660 may be defined as a first arc.

According to an example, the second circumference may be divided into a plurality of circumferences by the parting lines 660. An arc into which the second circumference is divided by the parting lines 660 may be defined as a second arc.

According to an example, the parting lines 660 may include first to eighteenth parting lines 660a, 660b, 660c, 660d, 660e, 660f, 660g, 660h, 660i, 660j, 660k, 6601, 660m, 660n, 660o, 660p, 660q, 660r.

According to an example, among a plurality of first arcs into which the first circumference at the first opening surface 601 is divided by the plurality of parting lines 660a to 660r, the lengths of two adjacent first arcs may be different. In other words, among the first arcs, the length of a first arc divided by any two adjacent parting lines may be different.

As an example, among the plurality of first arcs, the length of a first arc divided by the first parting line 660a and second parting line 660b may be different from the length of a first arc divided by the second parting line 660b and third parting line 660c among the first arcs.

As an example, among the plurality of first arcs, the length of a first arc divided by the second parting line 660b and third parting line 660c may be different from the length of a first arc divided by the third parting line 660c and fourth parting line 660d among the first arcs. Similarly, the lengths of first arcs divided by two adjacent parting lines among the plurality of parting lines 660a to 660r may be different.

According to an example, among a plurality of second arcs into which the second circumference at the second opening surface 603 is divided by the plurality of parting lines 660a to 660r, the lengths of two adjacent second arcs may be different. In other words, among the second arcs, the length of a second arc divided by any two adjacent parting lines may be different.

As an example, among the plurality of second arcs, the length of a second arc divided by the first parting line 660a and second parting line 660b may be different from the length of a second arc divided by the second parting line 660b and third parting line 660c among the second arcs.

As an example, among the plurality of second arcs, the length of a second arc divided by the second parting line 660b and third parting line 660c may be different from the length of a second arc divided by the third parting line 660c and fourth parting line 660d among the second arcs. Similarly, the lengths of second arcs divided by two adjacent parting lines among the plurality of parting lines 660a to 660r may be different.

According to an example, the length of a first target arc into which the first circumference is divided by two adjacent parting lines among the plurality of parting lines 660a to 660r may be different from the length of a second target arc into which the second circumference is divided by the two adjacent parting lines.

As an example, the length of a first target arc into which the first circumference is divided by the first parting line 660a and second parting line 660b may be different from the length of a second target arc into which the second circumference is divided by the first parting line 660a and second parting line 660b.

As an example, the length of a first target arc into which the first circumference is divided by the second parting line 660b and third parting line 660c may be different from the length of a second target arc into which the second circumference is divided by the second parting line 660b and third parting line 660c. Similarly, the lengths of first target arcs and second target arcs divided by any two adjacent parting lines among the plurality of parting lines 660a to 660r may be different.

According to an example, the parting lines 660 may be formed in a number equal to the number of sliding cores constituting the mold device 800. As an example, if the number of sliding cores is 18, 18 parting lines 660 may be formed in the second barrel 600. Hereinafter, it is assumed that the number of sliding cores and the number of parting lines 660 are 18.

According to an example, in the development view of (b), the interval between two adjacent parting lines included in the parting lines 660 may widen or narrow as the height h of the second barrel 600 increases. In other words, the interval between the two adjacent parting lines may not be the same according to the height h.

As an example, the interval between the first parting line 660a and second parting line 660b included in the parting lines 660 may narrow as the height h increases. In other words, interval 1-2 w₁₂ is narrower than interval 1-1 w₁₁.

As an example, the interval between the second parting line 660b and third parting line 660c included in the parting lines 660 may widen as the height h increases. In other words, interval 2-2 w₂₂ is wider than interval 2-1 w₂₁.

According to an example, in the development view of (b), each of odd-numbered parting lines included in the parting line 660 (e.g., the first parting line 660a, the third parting line 660c, ... the seventeenth parting line 660q) may be parallel to each other. Each of even-numbered parting lines included in the parting line 660 (e.g., the second parting line 660b, the fourth parting line 660d, ... the eighteenth parting line 660r) may be parallel to each other.

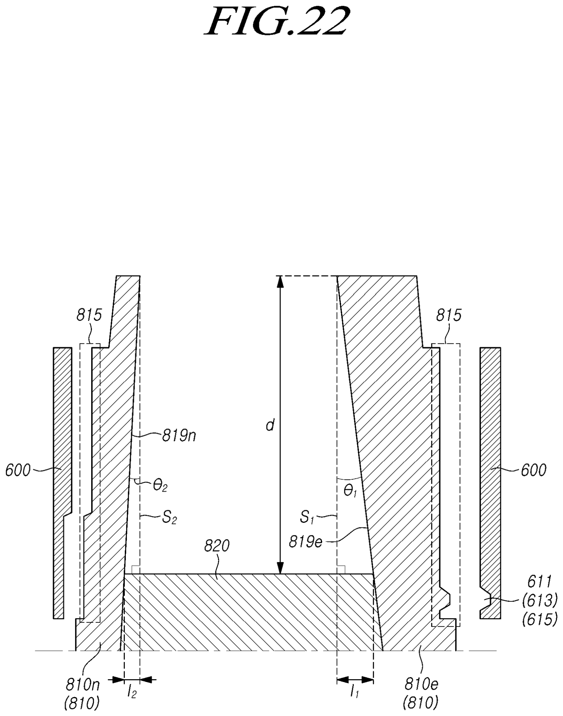

According to an example, in the development view of (b), two adjacent parting lines included in the first to eighteenth parting lines 660a to 660r may not be parallel to each other. This may occur because two adjacent sliding cores among the sliding cores constituting the mold device 800 are not aligned with each other. In other words, this may occur because the operating speeds of the two adjacent sliding cores are different. This is described in detail in FIG. 22.

FIG. 12 is a perspective view illustrating a mold device 800 according to an embodiment of the disclosure.

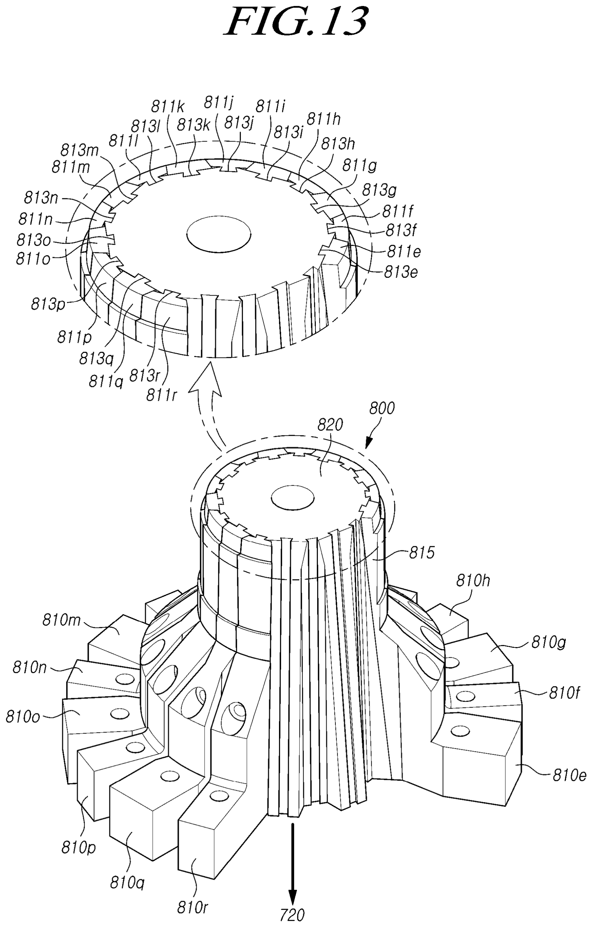

FIG. 13 is a perspective view illustrating a mold device 800 according to an embodiment of the disclosure. FIG. 13 illustrates that some sliding cores (e.g., the first to fourth sliding cores 810a, 810b, 810c, 810d) are removed from the mold device 800 illustrated in FIG. 12.

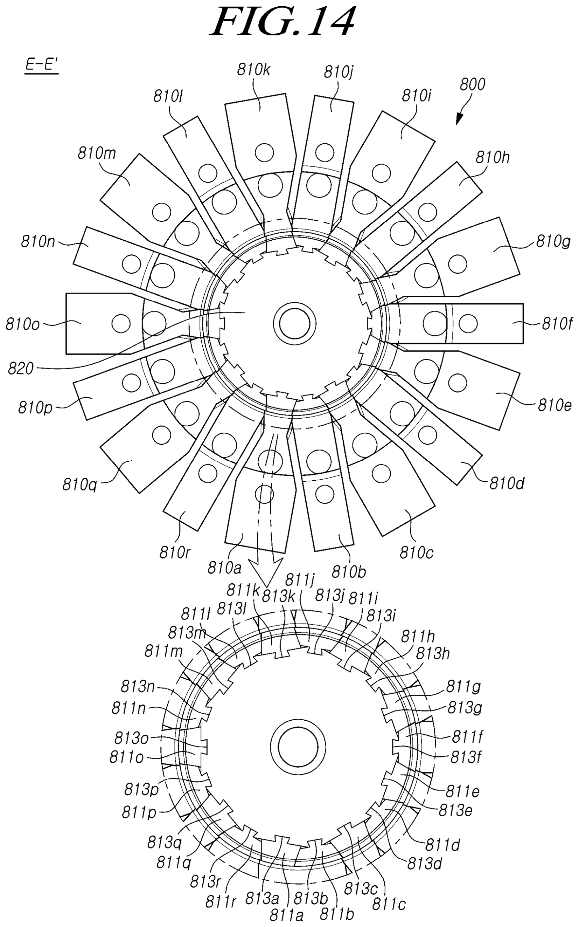

FIG. 14 is a plan view illustrating a mold device 800 according to an embodiment of the disclosure. FIG. 14 illustrates the mold device 800 illustrated in FIG. 12 viewed in the E-E' direction.

Referring to FIGS. 12 to 14, a first operation state is illustrated in which a center core 820 has moved to the uppermost position in a vertical direction for the mold device 800 to mold a second barrel (e.g., the second barrel 600 of FIG. 5).

According to an example, the mold device 800 may include a plurality of sliding cores 810a to 810r or a center core 820. The plurality of sliding cores 810a to 810r may include the first to eighteenth sliding cores 810a to 810r.

According to an example, for the mold device 800 to mold the second barrel 600, the center core 820 may operate in a vertical direction. A direction in which the center core 820 operates may be referred to as a second operating direction 720. The second operating direction 720 may correspond to an optical-axis direction (e.g., the optical axis L of FIG. 5).

According to an example, for the mold device 800 to mold the second barrel 600, in response to the center core 820 operating in the second operating direction 720, the plurality of sliding cores 810a to 810r may contract toward a center direction of the center core 820 or extend in a direction opposite to the center. A direction in which the plurality of sliding cores 810a to 810r contract or extend may be referred to as a first operating direction 710.

According to an example, when the plurality of sliding cores 810a to 810r contract or extend, some of the sliding cores may operate at different speeds from each other. Due to this, interference between the sliding cores may be minimized in response to the operation of the plurality of sliding cores 810a to 810r.

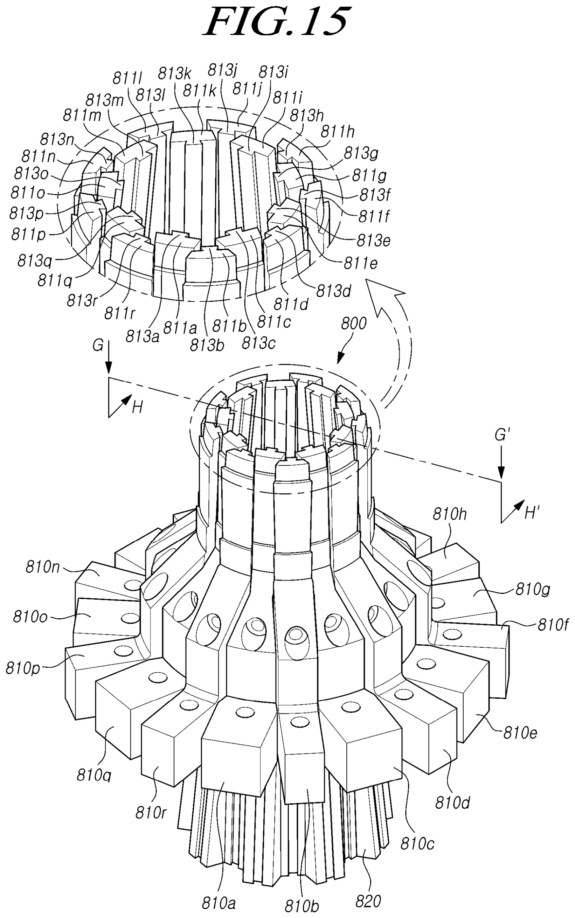

As an example, operating speeds of odd-numbered sliding cores (e.g., the first sliding core 810a, the third sliding core 810c, ... the seventeenth sliding core 810q) among the plurality of sliding cores 810a to 810r may be faster than even-numbered sliding cores (e.g., the second sliding core 810b, the fourth sliding core 810d, ... the eighteenth sliding core 810r). In other words, during the same operating time, a distance that the odd-numbered sliding cores contract or extend may be longer than a distance that the even-numbered sliding cores contract or extend. Related operations are described in detail in FIG. 15 and subsequent figures.

According to an example, the mold device 800 may include a molding portion 815. The molding portion 815 may be provided in the mold device 800 to mold an injection-molded product. The molding portion 815 may be formed as a predetermined outer circumferential surface provided by the plurality of sliding cores 810a to 810r. The molding portion 815 may be filled with injection-molded material to mold the second barrel 600. In the molding portion 815, there may be a step difference between adjacent sliding cores included in the plurality of sliding cores 810a to 810r. Due to this, parting lines (e.g., the parting lines 660a to 660r of FIG. 11) may be formed inside the second barrel 600 in response to the mold device 800 molding the second barrel 600.

According to an example, the molding portion 815 may have an embossed path formed corresponding to cam profiles (e.g., the cam profiles 611, 613, 615 or vertical profiles 621, 623, 625 of FIG. 5) formed inside the second barrel 600. Due to the embossed path, as the mold device 800 molds the second barrel 600, the cam profiles 611, 613, 615 or vertical profiles 621, 623, 625 may be formed inside the second barrel 600.

According to an example, the molding material may fill to a predetermined thickness along an outer circumferential surface of the molding portion 815. The mold device 800 may mold the second barrel 600 according to the operation of the plurality of sliding cores 810a to 810r and the center core 820.

According to an example, the plurality of sliding cores 810a to 810r may have sliding members 811a to 811r for the center core 820 to slide. The sliding members 811a to 811r may be provided with dovetail projections 813a to 813r for the center core 820 to slide in the second operating direction 720. Dovetail grooves 830a to 830r provided in the center core 820 may contact along the dovetail projections 813a to 813r, and the center core 820 may operate in the second operating direction 720.

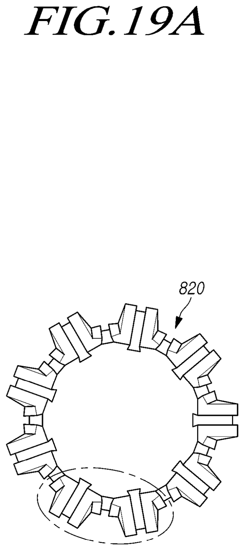

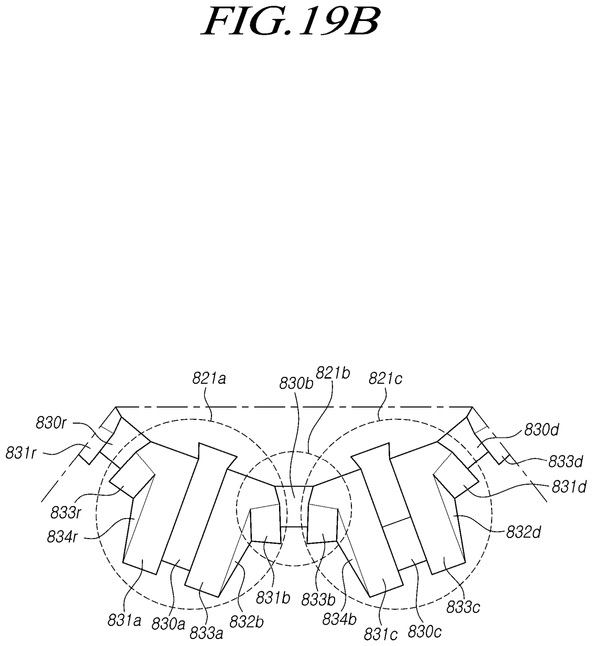

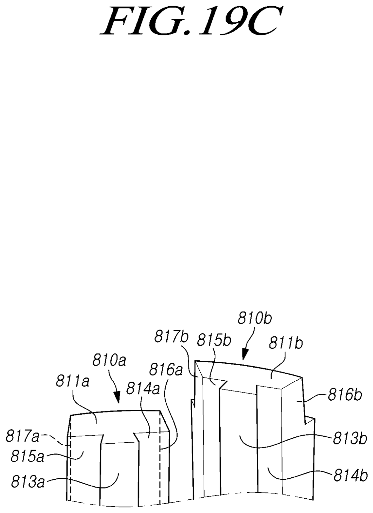

According to an example, a first sliding member 811a of the first sliding core 810a may include a dovetail projection 813a, a first sliding surface 814a (e.g., the first sliding surface 814a of FIG. 19), a second sliding surface 815a (e.g., the first sliding surface 815a of FIG. 19), a first side surface 816a (e.g., the first side surface 816a of FIG. 19), and a second side surface 817a (e.g., the second side surface 817a of FIG. 19). The first dovetail projection 813a may correspond to a first dovetail groove 830a (e.g., the first dovetail groove 830a of FIG. 19) provided in a first protrusion 821a (e.g., the first protrusion 821a of FIG. 19) of the center core 820. The first sliding surface 814a may correspond to a first sliding surface 831a (e.g., the first sliding surface 831a of FIG. 19) provided in the first protrusion 821a of the center core 820. The second sliding surface 815a may correspond to a second sliding surface 833a (e.g., the second sliding surface 833a of FIG. 19) provided in the first protrusion 821a of the center core 820.

According to an example, a second sliding member 811b of the second sliding core 810b may include a dovetail projection 813b, a first sliding surface 814b (e.g., the first sliding surface 814b of FIG. 19), a second sliding surface 815b (e.g., the first sliding surface 815b of FIG. 19), a first side surface 816b (e.g., the first side surface 816b of FIG. 19), and a second side surface 817b (e.g., the second side surface 817b of FIG. 19). The first dovetail projection 813b may correspond to a first dovetail groove 830b (e.g., the first dovetail groove 830b of FIG. 19) provided in a first recess 821b (e.g., the first recess 821b of FIG. 19) of the center core 820. The first sliding surface 814b may correspond to a first sliding surface 831b (e.g., the first sliding surface 831b of FIG. 19) provided in the first recess 821b of the center core 820. The second sliding surface 815b may correspond to a second sliding surface 833b (e.g., the second sliding surface 833b of FIG. 19) provided in the first recess 821b of the center core 820. The first side surface 816b may correspond to a first side surface 832b (e.g., the first side surface 832b of FIG. 19) provided in the first recess 821b of the center core 820. The second side surface 817b may correspond to a second side surface 834b (e.g., the second side surface 834b of FIG. 19) provided in the first recess 821b of the center core 820.

FIG. 15 is a perspective view illustrating a mold device 800 according to an embodiment of the disclosure.

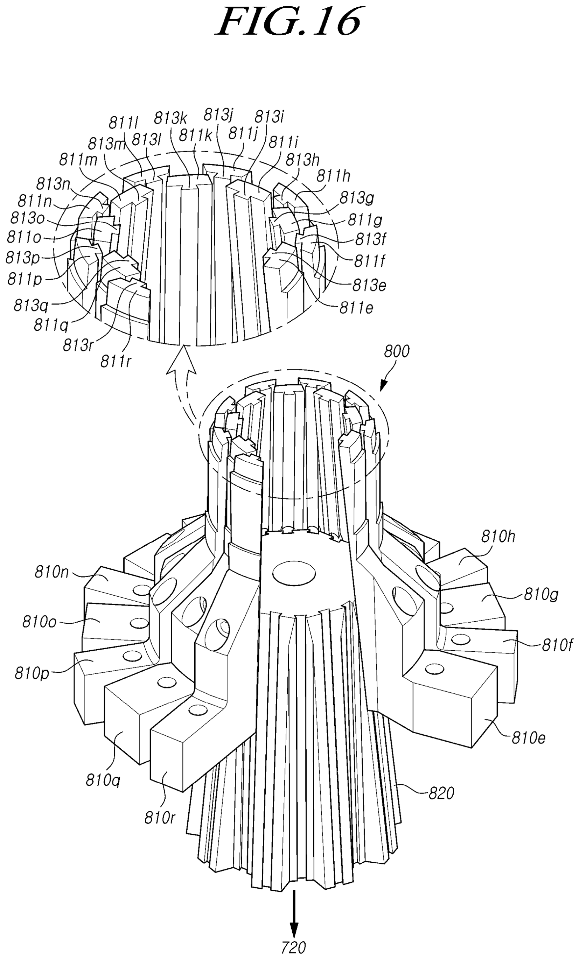

FIG. 16 is a perspective view illustrating a mold device 800 according to an embodiment of the disclosure. FIG. 16 illustrates that some sliding cores (e.g., the first to fourth sliding cores 810a, 810b, 810c, 810d) are removed from the mold device 800 illustrated in FIG. 15.

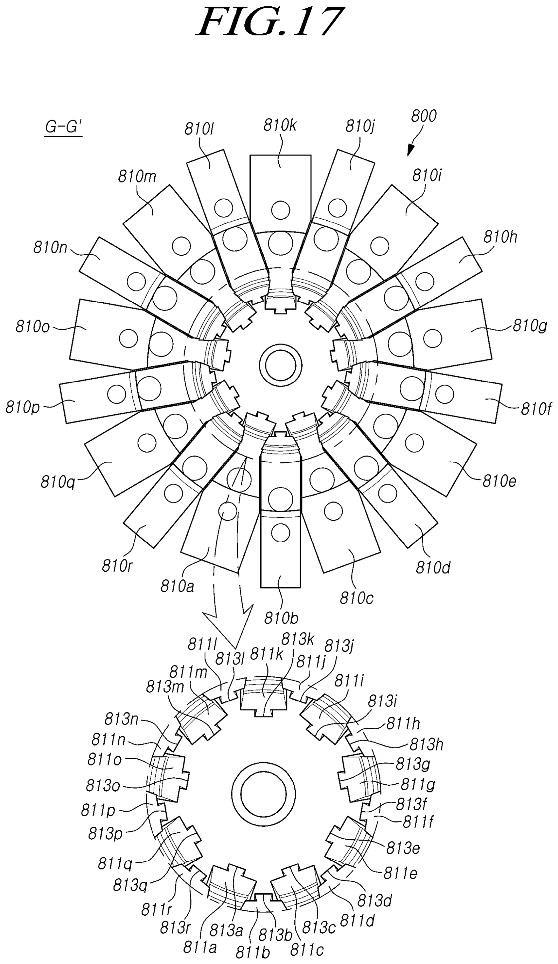

FIG. 17 is a plan view illustrating a mold device 800 according to an embodiment of the disclosure.

Referring to FIGS. 15 to 17, a second operation state is illustrated in which the center core 820 has moved a predetermined distance in the second operating direction 720 for the mold device 800 to mold a second barrel (e.g., the second barrel 600 of FIG. 5). Hereinafter, since all or portion corresponds to FIGS. 12 to 14, differences are mainly described.

According to an example, as the center core 820 moves a predetermined distance in the second operating direction 720, some sliding cores included in the plurality of sliding cores 810a to 810r may operate at different speeds from each other. Due to this, interference between the sliding cores may be minimized in response to the operation of the plurality of sliding cores 810a to 810r.

As an example, operating speeds of odd-numbered sliding cores (e.g., the first sliding core 810a, the third sliding core 810c, ... the seventeenth sliding core 810q) among the plurality of sliding cores 810a to 810r may be faster than even-numbered sliding cores (e.g., the second sliding core 810b, the fourth sliding core 810d, ... the eighteenth sliding core 810r). In other words, during the same operating time, a distance that the odd-numbered sliding cores contract or extend may be longer than a distance that the even-numbered sliding cores contract or extend. The moving speeds of the plurality of sliding cores 810a to 810r, are described in detail in FIG. 22.

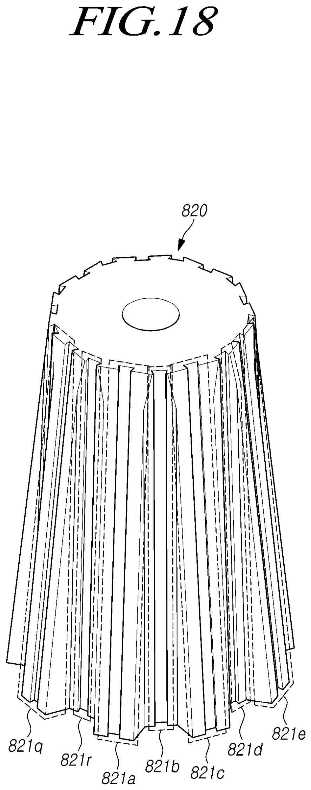

According to an example, a structure may be proposed for the center core 820 to operate in the second operating direction 720 while minimizing interference between the plurality of sliding cores 810a to 810r. The plurality of sliding cores 810a to 810r may each be provided with sliding portions 811a to 811r, and dovetail grooves 830a to 830r corresponding to the sliding portions 811a to 811r may be provided on an outer surface of the center core 820. The center core 820 corresponding to the sliding portions 811a to 811r may slide in the second operating direction 720, and the plurality of sliding cores 810a to 810r may contract in the first operating direction 710, or the center core 820 corresponding to the sliding portions 811a to 811r may slide in a direction opposite to the second operating direction 720, and the plurality of sliding cores 810a to 810r may extend in a direction opposite to the first operating direction 710. The structure of the dovetail grooves 830a to 830r is described in detail in FIG. 18 and subsequent figures.

FIG. 18 is a perspective view illustrating a center core 820 according to an embodiment of the disclosure.

FIGS. 19A to 19C are views illustrating a cross-section of the center core 820 cut at a predetermined height viewed from above and partial perspective views illustrating the first sliding core 810a and the second sliding core 810b, according to an embodiment of the disclosure.

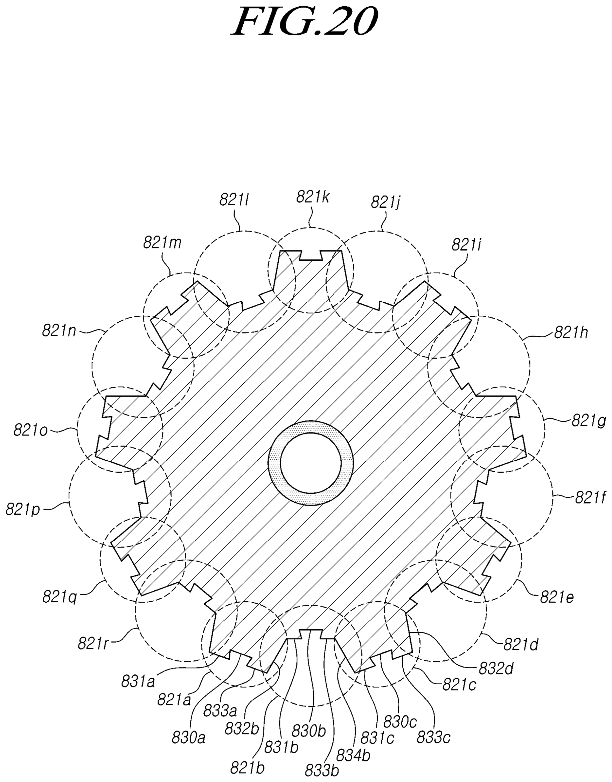

FIG. 20 is a cross-sectional view illustrating a center core 820 according to an embodiment of the disclosure.

Referring to FIGS. 18 to 20, the center core 820 is disposed inside the mold device 800 and may move in the second operating direction 720. As the center core 820 moves in the second operating direction 720 or in a direction opposite to the second operating direction 720, the plurality of sliding cores 810a to 810r may contract or extend.

According to an example, some of the plurality of sliding cores 810a to 810r may move a greater distance during the same time. For this purpose, angles formed between adjacent two sliding cores among the sliding cores 810a to 810r and the center core 820 may be different from each other. This is described in detail in FIG. 22.

According to an example, the center core 820 may alternately have protruding portions and recessed portions on an outer circumferential surface corresponding to the second operating direction 720. The protruding portions of the center core 820 may be referred to as protrusions 821a, 821c, ... 821q. The recessed portions of the center core 820 may be referred to as recesses 821b, 821d, ... 821r. The recesses 821b, 821d, ... 821r and the protrusions 821a, 821c, ... 821q may have a plurality of dovetail grooves 830a to 830r. The plurality of dovetail grooves 830a to 830r may include first to eighteenth dovetail grooves 830a to 830r. Odd-numbered dovetail grooves (e.g., the first dovetail groove 830a, the third dovetail groove 830c, ... the seventeenth dovetail groove 830q) included in the plurality of dovetail grooves 830a to 830r may be provided in respective protrusions 821a, 821c, ... 821q. Even-numbered dovetail grooves (e.g., the second dovetail groove 830b, the fourth dovetail groove 830d, ... the eighteenth dovetail groove 830r) included in the plurality of dovetail grooves 8301a to 830r may be provided in respective recesses 821b, 821d, ... 821r. The plurality of dovetail grooves 830a to 830r may have shapes corresponding to shapes of a plurality of dovetail projections 813a to 813r included in the plurality of sliding cores 810a to 810r. The dovetail projections 813a to 813r may contact the plurality of dovetail grooves 830a to 830r.

Although not illustrated, the center core 820 may have a plurality of dovetail projections (not illustrated), and the plurality of sliding cores 810a to 810r may have a plurality of dovetail grooves (not illustrated). Shapes of the plurality of sliding portions provided in the center core 820 and shapes of the dovetail grooves provided in the plurality of sliding cores 810a to 810r may correspond to each other.

According to an example, the first dovetail groove 830a and the first dovetail projection 813a may correspond to each other. The second dovetail groove 830b and the second dovetail projection 813b may correspond to each other. The third dovetail groove 830c and the third dovetail projection 813c may correspond to each other. The fourth dovetail groove 830d and the fourth dovetail projection 813d may correspond to each other. The fifth dovetail groove 830e and the fifth dovetail projection 813e may correspond to each other. The sixth dovetail groove 830f and the sixth dovetail projection 813f may correspond to each other. The seventh dovetail groove 830g and the seventh dovetail projection 813g may correspond to each other. The eighth dovetail groove 830h and the eighth dovetail projection 813h may correspond to each other. The ninth dovetail groove 830i and the ninth dovetail projection 813i may correspond to each other. The tenth dovetail groove 830j and the tenth dovetail projection 813j may correspond to each other. The eleventh dovetail groove 830k and the eleventh dovetail projection 813k may correspond to each other. The twelfth dovetail groove 8301 and the twelfth dovetail projection 8131 may correspond to each other. The thirteenth dovetail groove 830m and the thirteenth dovetail projection 813m may correspond to each other. The fourteenth dovetail groove 830n and the fourteenth dovetail projection 813n may correspond to each other. The fifteenth dovetail groove 830o and the fifteenth dovetail projection 813o may correspond to each other. The sixteenth dovetail groove 830p and the sixteenth dovetail projection 813p may correspond to each other. The seventeenth dovetail groove 830q and the seventeenth dovetail projection 813q may correspond to each other. The eighteenth dovetail groove 830r and the eighteenth dovetail projection 813r may correspond to each other.

For convenience of description, the description will focus on the first dovetail groove 830a and the second dovetail groove 830b among the plurality of dovetail grooves 830a to 830r. Odd-numbered dovetail grooves (e.g., the third dovetail groove 830c, the fifth dovetail groove 830e, ... the seventeenth dovetail groove 830q) included in the plurality of dovetail grooves 830a to 830r may correspond to the first dovetail groove 830a. Even-numbered dovetail grooves (e.g., the fourth dovetail groove 830d, the sixth dovetail groove 830f, ... the eighteenth dovetail groove 830r) included in the plurality of dovetail grooves 830a to 830r may correspond to the second dovetail groove 830b. Therefore, the description of the first dovetail groove 830a may also apply to odd-numbered dovetail grooves 830c, 830e, ... 830q except for the first dovetail groove 830a, and the description of the second dovetail groove 830b may also apply to even-numbered dovetail grooves 830d, 830f, ... 830r except for the second dovetail groove 830b.

According to an example, an angle formed between a surface on which the first dovetail groove 830a and the first dovetail projection 813a slide (e.g., the sliding surface 819e of FIG. 22) and a central axis of the center core 820 (e.g., the optical axis L) may be defined as a first operating angle (e.g., the first operating angle θ₁ of FIG. 22). An angle formed between a surface on which the second dovetail groove 830b and the second dovetail projection 813b slide (e.g., the sliding surface 819n of FIG. 22) and a central axis of the center core 820 (e.g., the optical axis L) may be defined as a second operating angle (e.g., the second operating angle θ₂ of FIG. 22). The first operating angle θ₁ and the second operating angle θ₂ may be substantially different. Due to this, as the center core 820 moves in the second operating direction 720, an inner sliding core corresponding to the first operating angle θ₁ having a relatively larger angle may move a greater distance than an inner sliding core corresponding to the second operating angle θ₂. As an example, a sliding core corresponding to the first operating angle θ₁ (e.g., the first sliding core 810a) may move a greater distance than a sliding core corresponding to the second operating angle θ₂ (e.g., the second sliding core 810b). This is described in detail in FIG. 22.

According to an example, the operating core 820 may contact the plurality of sliding cores 810a to 810r and slide in the second operating direction 720. As an example, the first dovetail groove 830a may slide along the first dovetail projection 813a. The second dovetail groove 830b may slide along the second dovetail projection 813b.

According to an example, the first protrusion 821a may protrude outward compared to the first recess 821b. The first protrusion 821a may include a first dovetail groove 830a, a first sliding surface 831a, and a second sliding surface 833a. The first dovetail groove 830a may correspond to the first dovetail projection 813a. The first sliding surface 831a may be defined as a surface positioned on the left side of the first dovetail groove 830a, and the second sliding surface 833a may be defined as a surface positioned on the right side of the first dovetail groove 830a. The first dovetail projection 813a may be guided by the first dovetail groove 830a provided in the first protrusion 821a and slide along the first sliding surface 831a and the second sliding surface 833a.

According to an example, the first recess 821b may include a second dovetail groove 830b, a first sliding surface 831b, a second sliding surface 833b, a first side surface 832b, and a second side surface 834b. The first sliding surface 831b may be defined as a surface positioned on the left side of the second dovetail groove 830b, and the second sliding surface 833b may be defined as a surface positioned on the right side of the second dovetail groove 830b. The second dovetail projection 813b may be guided by the second dovetail groove 830b provided in the first recess 821b and slide along the first sliding surface 831b and the second sliding surface 833b. The first side surface 832b may be defined as a side surface positioned on the left side of the first sliding surface 831b. The second side surface 834b may be defined as a side surface positioned on the right side of the second sliding surface 833b.

According to an example, as the center core 820 moves in the second operating direction 720 in relation to the plurality of sliding cores 810a to 810r, the first dovetail groove 830a and the dovetail projection 813a of the first sliding core 810a may correspond to each other.

Referring to FIGS. 19B and 19C, the first dovetail groove 830a and the first dovetail projection 813a may correspond to each other. As the center core 820 moves in the second operating direction 720, the first dovetail projection 813a may be guided by the first dovetail groove 830a, and a first sliding surface 814a may slide while contacting the first sliding surface 831a of the first protrusion 821a. As the center core 820 moves in the second operating direction 720, the first dovetail projection 813a may be guided by the first dovetail groove 830a, and a second sliding surface 815a may slide while contacting the second sliding surface 833a of the first protrusion 821a.

According to an example, due to angles formed by the first sliding surfaces 831a, 831c, 831e, ... 831q and second sliding surfaces 833a, 833c, 833e, ... 833q of the protrusions 821a, 821c, 821e, ... 821q, and the corresponding first sliding surfaces 814a, 814c, ... 814q and second sliding surfaces 815a, 815c, ... 815q of the odd-numbered sliding cores 810a, 810c, ... 810q, with respect to the height direction of the center core 820 (e.g., the optical axis L direction), the odd-numbered sliding cores 810a, 810c, ... 810q may move a predetermined distance toward the center direction of the center core 820 (e.g., the first operating direction 710). Due to angles formed by the first sliding surfaces 831b, 831d, ... 831r and second sliding surfaces 833b, 833d, ... 833r of the recesses 821b, 821d, ... 821r, and the corresponding first sliding surfaces 814b, 814d, 814f, ... 814r and second sliding surfaces 815b, 815d, 815f, ... 815r of the even-numbered sliding cores 810b, 810d, ... 810r, with respect to the height direction of the center core 820 (e.g., the optical axis L direction), the even-numbered sliding cores 810b, 810d, ... 810r may move a predetermined distance toward the center direction of the center core 820 (e.g., the first operating direction 710).

According to an example, because the angle formed between the protrusions 821a, 821c, 821e, ... 821q and the first sliding surfaces 814a, 814c, ... 814q through the second sliding surfaces 815a, 815c, ... 815q of the odd-numbered sliding cores 810a, 810c, ... 810q (e.g., the first operating angle θ₁) is greater than the angle formed between the recesses 821b, 821d, ... 821r and the first sliding surfaces 814b, 814d, 814f, ... 814r through the second sliding surfaces 815b, 815d, 815f, ... 815r of the even-numbered sliding cores 810b, 810d, ... 810r (e.g., the second operating angle θ₂), the odd-numbered sliding cores 810a, 810c, ... 810q may move a greater distance than the even-numbered sliding cores 810b, 810d, ... 810r in the center direction of the center core 820 (e.g., the first operating direction 710). According to an example, as the center core 820 moves in the second operating direction 720 relative to the plurality of sliding cores 810a through 810r, the second dovetail groove 830b and the second dovetail projection 813b of the second sliding core 810b may correspond to each other.

Referring to FIGS. 19B and 19C, the second dovetail groove 830b of the first recess 821b and the second dovetail projection 813b may correspond to each other. As the center core 820 moves in the second operating direction 720, a first sliding surface 814b of the second sliding core 810b may slide while contacting the first sliding surface 831b of the first recess 821b. As the center core 820 moves in the second operating direction 720, a second sliding surface 815b of the second sliding core 810b may slide while contacting the second sliding surface 833b of the first recess 821b. As the center core 820 moves in the second operating direction 720, a first side surface 816b of the second sliding core 810b may slide while contacting the first side surface 832b of the first recess 821b, and a second side surface 817b of the first sliding core 810a may slide while contacting the second side surface 834a of the first recess 821b.

According to an example, as the center core 820 moves a predetermined distance (e.g., the moving distance d of FIG. 22) in the second operating direction 720, it is guided by the dovetail grooves 830a to 830r and the dovetail projections 813a to 813r inclined by the first operating angle or the second operating angle θ₁, θ₂, and the center core 820 may be operated a predetermined distance (e.g., l₁, l₂ of FIG. 22) in the first operating direction 710 while sliding on sliding surfaces provided in the sliding cores 810a to 810r.

According to an example, the first side surface 832b or the second side surface 834b of the first recess 821b may be inclined at predetermined angles with the first sliding surface 831b or the second sliding surface 833b, respectively. By the presence of the first side surface 832b or the second side surface 834b, the number of the plurality of divided sliding cores (e.g., the first to eighteenth sliding cores 810a to 810r of FIG. 12) may be extended to 18.

As an example, due to the presence of the first side surface 832b and the second side surface 834b forming predetermined angles with a lower surface, the first sliding surface 831b and the second sliding surface 833b of the second dovetail groove 821b may be extended by the length of the center core 820 in the second operating direction 720. Thus, the second dovetail groove 821b may slide in the second operating direction 720 corresponding to the sliding surfaces 831b, 833b.

As an example, when the first side surface 832b or the second side surface 834b is not present, the first sliding surface 831b and the second sliding surface 833b provided in the first recess 821b of the center core 820 may come into contact as they extend in the second operating direction 720. Due to this, the first sliding surface 814b and the second sliding surface 815b of the second sliding core 810b may not be extended by the length of the center core 820 in the second operating direction 720.

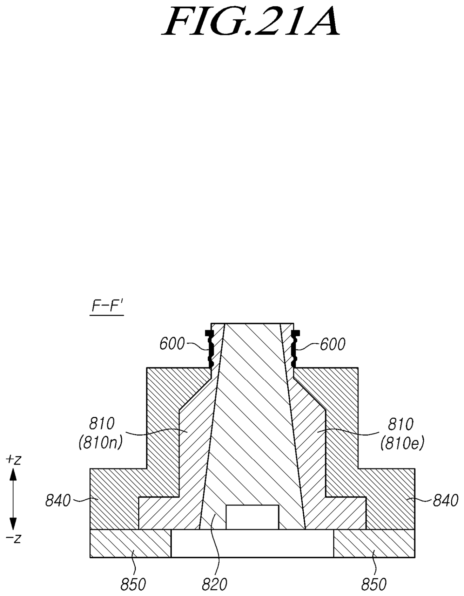

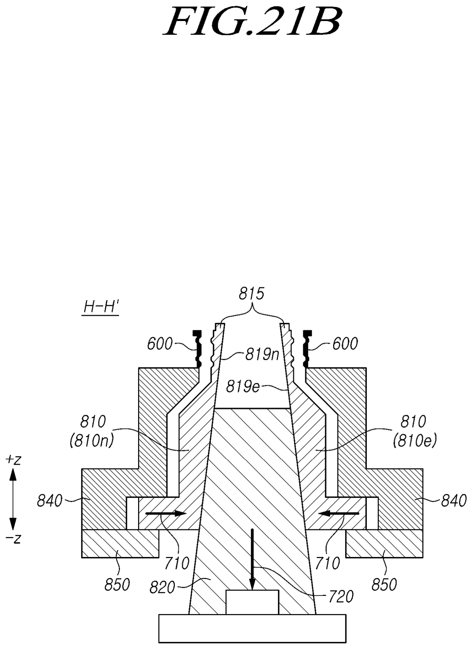

FIGS. 21A and 21B illustrate cross-sections of a mold device 800 viewed from the front according to an embodiment of the disclosure.

Referring to FIGS. 21A and 21B, FIG. 21A illustrates a first operation state (e.g., the first operation state of FIGS. 12 to 14), and FIG. 21B illustrates a second operation state (e.g., the second operation state of FIGS. 15 to 17). In other words, FIG. 21A illustrates a cross-sectional view taken along line F-F' in FIG. 12, and FIG. 21B illustrates a cross-sectional view taken along line H-H' in FIG. 15.

According to an example, the mold device 800 may further include a stripper block 840 and a backing plate 850 in addition to the sliding core 810 (e.g., the plurality of sliding cores 810a to 810r of FIG. 12) and the center core 820 (e.g., the center core 820 of FIG. 12). In addition to what is illustrated, the mold device 800 may further include an outer molding portion and outer sliding cores (not illustrated) for fixing the second barrel 600 or engraving a predetermined pattern in an outer circumferential surface of the second barrel 600.

According to an example, the stripper block 840 may be disposed on an outer surface of the sliding core 810. The stripper block 840 may be understood as a component provided to fix a mold portion or restrict movement of the mold portion. In other words, the stripper block 840 may prevent the sliding core 810 from moving in a +z-axis direction (e.g., the +z-axis direction of FIG. 21) in response to the center core 820 moving in the second operating direction 720 or in a direction opposite to the second operating direction 720.

According to an example, the backing plate 850 may be implemented as a ringshaped plate having a predetermined thickness. The backing plate 850 may be positioned on a lower surface of the stripper block 840. The backing plate 850 may prevent the sliding core 810 from moving in a -z-axis direction (e.g., the -z-axis direction of FIG. 21) in response to the center core 820 moving in the second operating direction 720 or in a direction opposite to the second operating direction 720.

According to an example, in response to the mold device 800 operating from a first operation state (a) to a second operation state (b), the center core 820 may move in the second operating direction 720. As the center core 820 moves in the second operating direction 720, the sliding core 810 may move in the first operating direction 710, which is the center direction. As an example, a fifth sliding core 810e included in the sliding core 810 may move to the left, and a fourteenth sliding core 810n included in the sliding core 810 may move to the right. As the sliding core 810 moves in the first operating direction 710, which is the center direction, the second barrel (e.g., the second barrel 600 of FIG. 5) attached to the molding portion 815 of the mold device 800 may be separated.

According to an example, in response to the mold device 800 operating from the second operation state (b) to the second operation state (b), the center core 820 may move in a direction opposite to the second operating direction 720. As the center core 820 moves in a direction opposite to the second operating direction 720, the sliding core 810 may move in a direction opposite to the first operating direction 710, which is the opposite direction of the center direction. As an example, the fifth sliding core 810e included in the sliding core 810 may move to the right, and the fourteenth sliding core 810n included in the sliding core 810 may move to the left. As the sliding core 810 moves in a direction opposite to the first operating direction 710, the second barrel (e.g., the second barrel 600 of FIG. 5) attached to the molding portion 815 of the mold device 800 may be molded. Corresponding to the embossed cam profile provided in the molding portion 815, at least one cam profile (e.g., the first to third cam profiles 611, 613, 615 of FIG. 5) may be molded in the second barrel 600.

According to an example, as the mold device 800 moves, some sliding cores included in the sliding core 810 (e.g., the fifth sliding core 810e or the fourteenth sliding core 810n) may move at different speeds from each other. As an example, moving speeds of odd-numbered sliding cores (e.g., the first sliding core, the third sliding core, ... the fifteenth sliding core, the seventeenth sliding core 810a, 810c, ... 810p, 810r of FIG. 12) included in the sliding core 810 and even-numbered sliding cores (e.g., the second sliding core, the fourth sliding core, ... the sixteenth sliding core, the eighteenth sliding core 810b, 810d, ... 810o, 810q of FIG. 12) included in the sliding core 810 may be implemented differently. Due to this, interference may be minimized as the plurality of sliding cores 810 included in the mold device 800 move in the first operating direction 710. This is described with reference to FIG. 22.

FIG. 22 is a front view illustrating some sliding cores (e.g., the fifth sliding core 810e and the fourteenth sliding core 810n of FIG. 21) included in a sliding core 810 (e.g., the sliding core 810 of FIG. 21) and a center core 820 (e.g., the center core 820 of FIG. 12) according to an embodiment of the disclosure.

Referring to FIG. 22, to describe that moving speeds of some sliding cores 810e, 810n are different corresponding to the operation of the center core 820, a portion of FIG. 21(b) is enlarged and illustrated.

According to an example, in response to the center core 820 moving in the second operating direction 720, the fifth sliding core 810e and the fourteenth sliding core 810n included in the sliding core 810 may move in the first operating direction 710 (e.g., the center direction of the mold device 800).

According to an example, an angle formed between a surface 819f on which the first sliding surface 814e and the second sliding surface 815e of the fifth sliding core 810e and the first sliding surface 831e and the second sliding surface 833e of the third protrusion 821e slide and a first surface S₁ may be defined as a first operating angle θ₁. Here, a direction in which the first surface S₁ extends may correspond to all or some of the optical-axis direction L.

According to an example, an angle formed between a surface 819n on which the first sliding surface 814n and the second sliding surface 815n of the fourteenth sliding core 810n and the first sliding surface 831n and the second sliding surface 833n of the seventh recess 821n slide and a second surface S₂ may be defined as a second operating angle θ₂. Here, a direction in which the second surface S₂ extends may entirely or partially correspond to the optical-axis direction L. A relationship between the first operating angle θ₁ and the second operating angle θ₂ may be defined as θ₁>θ₂.

According to an example, in response to the center core 820 moving by d in the second operating direction 720, a distance that the fifth sliding core 810e moves in the first operating direction 710 may be defined as l₁.

According to an example, in response to the center core 820 moving by d in the second operating direction 720, a distance that the fourteenth sliding core 810n moves in the first operating direction 710 may be defined as l₂.

According to an example, since an angle formed between the second operating direction 720 and an upper surface of the center core 820 corresponds to a vertical angle, l₁ may be derived as l₁=d*tan(θ₁), and l₂ may be derived as l₂=d*tan(θ₂). By the defined relationship between θ₁ and θ₂, l₂>l₁ may be derived.

According to an example, in response to the center core 820 moving in the second operating direction 720, it may be identified that a distance moved by the fifth sliding core 810e during the same time is greater than a distance moved by the fourteenth sliding core 810n. Accordingly, it may be derived that moving speeds of odd-numbered sliding cores (e.g., the first sliding core, the third sliding core, ... the fifteenth sliding core, the seventeenth sliding core 810a, 810c, ... 810p, 810r of FIG. 12) are greater than moving speeds of even-numbered sliding cores (e.g., the second sliding core, the fourth sliding core, ... the sixteenth sliding core, the eighteenth sliding core 810b, 810d, ... 810o, 810q of FIG. 12).

According to an example, by implementing different angles of inclined surfaces where sliding cores contact the center core 820, moving speeds of the odd-numbered sliding cores 810a, 810c, ... 810p, 810r and the even-numbered sliding cores 810b, 810d, ... 810o, 810q may be implemented differently. Due to this, interference between adjacent sliding cores included in the sliding core may be minimized.

A barrel assembly 400 (e.g., the barrel assembly 400 of FIG. 4) according to an embodiment of the disclosure may comprise a first barrel 500 having at least one projection 511, 513, 515 provided on an outer circumferential surface thereof, and a second barrel 600 having guide grooves 611, 613, 615 provided in an inner circumferential surface thereof, the guide grooves corresponding to a path along which the at least one projection 511, 513, 515 moves considering that the first barrel 500 is inserted and coupled, and having an inner angle of 20° to 30°. The plurality of parting lines 660a to 660r extending from a first opening surface 601 to a second opening surface 603 provided on two opposite sides of the second barrel 600 may be included in the inner circumferential surface of the second barrel 600. The number of the parting lines 660a to 660r may be configured as 18. However, the disclosure is not limited thereto, and the parting lines 660a to 660r may be configured as 18 or more. Lengths of two adjacent first arcs among a plurality of first arcs obtained by dividing a first circumference at the first opening surface 601 by the plurality of parting lines 660a to 660r may be different from each other. Lengths of two adjacent second arcs among a plurality of second arcs obtained by dividing a second circumference at the second opening surface 603 by the plurality of parting lines 660a to 660r may be different from each other. A length of a first target arc obtained by dividing the first circumference by two adjacent parting lines among the plurality of parting lines 660a to 660r may be different from a length of a second target arc obtained by dividing the second circumference by the two adjacent parting lines.

In the barrel assembly 400 according to an embodiment of the disclosure, the plurality of parting lines 660a to 660r may include a first parting line 660a, a second parting line 660b, and a third parting line 660c. A length of a first arc obtained by dividing the first circumference by the first parting line 660a and the second parting line 660b may be different from a length of a first arc obtained by dividing the first circumference by the second parting line 660b and the third parting line 660c.

In the barrel assembly 400 according to an embodiment of the disclosure, the plurality of parting lines 660a to 660r may include a first parting line 660a and a second parting line 660b. A length of a first target arc obtained by dividing the first circumference by the first parting line 660a may be different from a length of a second target arc obtained by dividing the second circumference by the second parting line 660b.

In the barrel assembly 400 according to an embodiment of the disclosure, the at least one projection 511, 513, 515 or the guide grooves 611, 613, 615 may be disposed at 120° intervals.

In the barrel assembly 400 according to an embodiment of the disclosure, the plurality of parting lines 660a to 660r may be configured as 18, and an inner angle 640, 650 of the guide grooves 611, 613, 615 may be 20° to 30°.

In the barrel assembly 400 according to an embodiment of the disclosure, the at least one projection 511, 513, 515 may have a truncated cone shape.

In the barrel assembly 400 according to an embodiment of the disclosure, the guide grooves 611, 613, 615 may be formed by a combination of straight guide grooves and curved guide grooves considering a movement path of the first barrel 500.

In the barrel assembly 400 according to an embodiment of the disclosure, the second barrel 600 may include at least one vertical guide groove 621, 623, 625 that does not intersect with a path of the guide grooves 611, 613, 615, and the at least one vertical guide groove 621, 623, 625 may be disposed at 120° intervals.

In the barrel assembly 400 according to an embodiment of the disclosure, the inner circumferential surface may include a gear groove 670 formed to engage with a gear for power transmission, or a screw recess for coupling with an acme thread for power transmission.

In the barrel assembly 400 according to an embodiment of the disclosure, the number of the plurality of parting lines 660a to 660r may be determined by a number of sliding cores 810a to 810r included in a mold device 800 for injection molding the second barrel 600.

In the barrel assembly 400 according to an embodiment of the disclosure, an inner angle 640, 650 of the guide grooves 611, 613, 615, an inner angle of the gear groove 670, or an inner angle of the screw recess may be determined considering a number of sliding cores included in a mold device 800 for injection molding the second barrel 600.

An electronic device 101, 200 (e.g., the electronic device 101 of FIG. 1 or the electronic device 200 of FIG. 2) according to an embodiment of the disclosure may comprise a barrel assembly 400 for receiving a lens group member that is configured to move in an optical axis direction by a rotational operation of a plurality of barrels 500, 600. In an outer barrel 600 among the plurality of barrels 500, 600 positioned on an outside when the plurality of barrels are inserted and coupled in the barrel assembly 400, a plurality of parting lines 660a to 660r extending from a first opening surface 601 to a second opening surface 603 provided on two opposite sides of the barrel 600 may be included in the inner circumferential surface of the barrel 600. The plurality of parting lines 660a to 660r may be configured as 18 or more. Lengths of two adjacent first arcs among a plurality of first arcs obtained by dividing a first circumference at the first opening surface 601 by the plurality of parting lines 660a to 660r may be different from each other. Lengths of two adjacent second arcs among a plurality of second arcs obtained by dividing a second circumference at the second opening surface 603 by the plurality of parting lines 660a to 660r may be different from each other. A length of a first target arc obtained by dividing the first circumference by two adjacent parting lines among the plurality of parting lines 660a to 660r may be different from a length of a second target arc obtained by dividing the second circumference by the two adjacent parting lines.

In the electronic device 101, 200 according to an embodiment of the disclosure, the plurality of parting lines 660a to 660r may include a first parting line 660a, a second parting line 660b, and a third parting line 660c. A length of a first arc obtained by dividing the first circumference by the first parting line 660a and the second parting line 660b may be different from a length of a first arc obtained by dividing the first circumference by the second parting line 660b and the third parting line 660c.

In the electronic device 101, 200 according to an embodiment of the disclosure, the plurality of parting lines 660a to 660r may include a first parting line 660a and a second parting line 660b. A length of a first target arc obtained by dividing the first circumference by the first parting line 660a may be different from a length of a second target arc obtained by dividing the second circumference by the second parting line 660b.

In the electronic device 101, 200 according to an embodiment of the disclosure, the at least one projection 511, 513, 515 or the guide grooves 611, 613, 615 may be disposed at 120° intervals.

In the electronic device 101, 200 according to an embodiment of the disclosure, the plurality of parting lines 660a to 660r may be configured as 18 or more, and an inner angle 640, 650 of the guide grooves 611, 613, 615 may be 20° to 30°.

In the electronic device 101, 200 according to an embodiment of the disclosure, at least one projection 511, 513, 515 provided on an inner barrel 500 positioned on an inside when the plurality of barrels 500, 600 are inserted and coupled may have a truncated cone shape.

In the electronic device 101, 200 according to an embodiment of the disclosure, the guide grooves 611, 613, 615 may be formed by a combination of straight guide grooves and curved guide grooves considering a movement path of the inner barrel 500 among the plurality of barrels 500, 600.

In the electronic device 101, 200 according to an embodiment of the disclosure, the barrel 600 may include at least one vertical guide groove 621, 623, 625 that does not intersect with a path of the guide grooves 611, 613, 615, and the at least one vertical guide groove 621, 623, 625 may be disposed at 120° intervals.

In the electronic device 101, 200 according to an embodiment of the disclosure, the inner circumferential surface may include a gear groove 670 formed to engage with a gear for power transmission, or a screw recess for coupling with an acme thread for power transmission.

In the electronic device 101, 200 according to an embodiment of the disclosure, the number of the plurality of parting lines 660a to 660r may be determined by a number of sliding cores 810a to 810r included in a mold device 800 for injection molding the barrel 600.

In the electronic device 101, 200 according to an embodiment of the disclosure, an inner angle 640, 650 of the guide grooves 611, 613, 615, an inner angle of the gear groove 670, or an inner angle of the screw recess may be determined considering a number of sliding cores included in a mold device 800 for injection molding the barrel 600.

Support force of a barrel assembly according to an embodiment of the disclosure may be enhanced.

The barrel assembly according to an embodiment of the disclosure may prevent separation due to external impact.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

An embodiment of the disclosure and terms used therein are not intended to limit the technical features described in the disclosure to specific embodiments, and should be understood to include various modifications, equivalents, or substitutes of the embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in the form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an example, a method according to various examples of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various examples, each component (e.g., a module or a program) of the above-described components may include a single entity or multiple entities. Some of the plurality of entities may be separately disposed in different components. According to various examples, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to an embodiment, operations performed by the module, the program, or another component may be carried out sequentially, in parallel, repeatedly, or heuristically, or one or more of the operations may be executed in a different order or omitted, or one or more other operations may be added.

## Claims

1. A barrel assembly (400) for receiving a lens group member, comprising:
a first barrel (500) having at least one projection (511, 513, 515) provided on an outer circumferential surface thereof; and
a second barrel (600) having guide grooves (611, 613, 615) provided in an inner circumferential surface thereof, the guide grooves corresponding to a path along which the at least one projection (511, 513, 515) moves considering that the first barrel (500) is inserted and coupled, and having an inner angle of 20° to 30°,
wherein eighteen or more parting lines (660a to 660r) extending from a first opening surface (601) to a second opening surface (603) provided on two opposite sides of the second barrel (600) are included in the inner circumferential surface of the second barrel (600), and
wherein lengths of two adjacent first arcs among a plurality of first arcs obtained by dividing a first circumference at the first opening surface (601) by the parting lines (660a to 660r) are different from each other,
wherein lengths of two adjacent second arcs among a plurality of second arcs obtained by dividing a second circumference at the second opening surface (603) by the parting lines (660a to 660r) are different from each other, and
wherein a length of a first target arc obtained by dividing the first circumference by two adjacent parting lines among the parting lines (660a to 660r) is different from a length of a second target arc obtained by dividing the second circumference by the two adjacent parting lines.

2. The barrel assembly (400) of claim 1, wherein the parting lines (660a to 660r) include a first parting line (660a), a second parting line (660b), and a third parting line (660c), and
wherein a length of a first arc obtained by dividing the first circumference by the first parting line (660a) and the second parting line (660b) is different from a length of a first arc obtained by dividing the first circumference by the second parting line (660b) and the third parting line (660c).

3. The barrel assembly (400) of claim 1 or 2, wherein the parting lines (660a to 660r) include a first parting line (660a) and a second parting line (660b), and
wherein a length of a first target arc obtained by dividing the first circumference by the first parting line (660a) is different from a length of a second target arc obtained by dividing the second circumference by the second parting line (660b).

4. The barrel assembly (400) of any one of claims 1 to 3, wherein the at least one projection (511, 513, 515) has a truncated cone shape.

5. The barrel assembly (400) of any one of claims 1 to 4, wherein the at least one projection (511, 513, 515) or the guide grooves (611, 613, 615) are disposed at 120° intervals.

6. The barrel assembly (400) of claim 1, wherein the guide grooves (611, 613, 615) are formed by a combination of straight guide grooves and curved guide grooves considering a movement path of the first barrel (500).

7. The barrel assembly (400) of claim 1, wherein the second barrel (600) includes at least one vertical guide groove (621, 623, 625) that does not intersect with a path of the guide grooves (611, 613, 615), and
wherein the at least one vertical guide groove (621, 623, 625) is disposed at 120° intervals.

8. The barrel assembly (400) of any one of claims 1 to 7, wherein the inner circumferential surface includes a gear groove (670) formed to engage with a gear for power transmission, or a screw recess for coupling with an acme thread for power transmission.

9. The barrel assembly (400) of any one of claims 1 to 8, wherein a number of the parting lines (660a to 660r) is determined by a number of sliding cores (810a to 810r) included in a mold device (800) for injection molding the second barrel (600).

10. The barrel assembly (400) of claim 8, wherein an inner angle (640, 650) of the guide grooves (611, 613, 615), an inner angle of the gear groove (670), or an inner angle of the screw recess is determined considering a number of sliding cores (810a to 810r) included in a mold device (800) for injection molding the second barrel (600).

11. An electronic device (101, 200) comprising:
a barrel assembly (400) for receiving a lens group member that is configured to move in an optical axis direction by a rotational operation of a plurality of barrels (500, 600),
wherein an outer barrel (600) among the plurality of barrels (500, 600) positioned on an outside when the plurality of barrels are inserted and coupled includes:
guide grooves (611, 613, 615) having an inner angle of 20° to 30° provided in an inner circumferential surface of the barrel (600); and
eighteen or more parting lines (660a to 660r) extending from a first opening surface (601) to a second opening surface (603) provided on two opposite sides of the barrel (600) are included in the inner circumferential surface of the barrel (600), and
wherein lengths of two adjacent first arcs among a plurality of first arcs obtained by dividing a first circumference at the first opening surface (601) by the parting lines (660a to 660r) are different from each other,
wherein lengths of two adjacent second arcs among a plurality of second arcs obtained by dividing a second circumference at the second opening surface (603) by the parting lines (660a to 660r) are different from each other, and
wherein a length of a first target arc obtained by dividing the first circumference by two adjacent parting lines among the parting lines (660a to 660r) is different from a length of a second target arc obtained by dividing the second circumference by the two adjacent parting lines.

12. The electronic device (101, 200) of claim 11, wherein the parting lines (660a to 660r) include a first parting line (660a), a second parting line (660b), and a third parting line (660c), and
wherein a length of a first arc obtained by dividing the first circumference by the first parting line (660a) and the second parting line (660b) is different from a length of a first arc obtained by dividing the first circumference by the second parting line (660b) and the third parting line (660c).

13. The electronic device (101, 200) of claim 11 or 12, wherein the parting lines (660a to 660r) include a first parting line (660a) and a second parting line (660b), and
wherein a length of a first target arc obtained by dividing the first circumference by the first parting line (660a) is different from a length of a second target arc obtained by dividing the second circumference by the second parting line (660b).

14. The electronic device (101, 200) of any one of claims 11 to 13, wherein at least one projection (511, 513, 515) provided on an inner barrel (500) positioned on an inside when the plurality of barrels (500, 600) are inserted and coupled has a truncated cone shape.

15. The electronic device (101, 200) of any one of claims 11 to 14, wherein the at least one projection (511, 513, 515) or the guide grooves (611, 613, 615) are disposed at 120° intervals.
